# EUROPEAN PATENT APPLICATION

(11) **EP 4 629 043 A1**
(43) Date of publication of application: **08.10.2025**
(21) Application number: 23909059.0
(22) Date of filing: 28.06.2023
(51) Int. Cl.: G06F 3/04812

(54) **DISPLAY METHOD AND ELECTRONIC DEVICE**

(30) Priority: 29.12.2022 CN 202211717452
(71) Applicant: Huawei Technologies Co., Ltd., Shenzhen, Guangdong 518129 (CN)
(72) Inventor: WANG, Yanxin, Shenzhen, Guangdong 518129 (CN); HUANG, Bo, Shenzhen, Guangdong 518129 (CN); LV, Ren, Shenzhen, Guangdong 518129 (CN)
(74) Representative: Maiwald GmbH
(86) International application number: PCT/CN2023/103310
(87) International publication number: WO 2024/139115

(57) **Abstract**

This application provides a display method. The method is applied to an electronic device, a screen of the electronic device is a punch-hole screen, a punch-hole location on the punch-hole screen is a first location on the screen, and a pattern corresponding to the punch-hole screen is a first pattern. The electronic device displays a first interface in the first pattern; detects a first operation of a user, and determines a second pattern; displays the first interface in the second pattern; and detects a second operation of the user, and displays a second interface in the second pattern. In embodiments of this application, the electronic device may change a front-facing camera pattern based on an operation of the user, so that display diversity is enriched. In this way, the user can change the front-facing camera pattern to a pattern required by the user, so that use experience of the user can be improved.

## Description

This application claims priority to Chinese Patent Application No. 202211717452.2, filed with the China National Intellectual Property Administration on December 29, 2022 and entitled "DISPLAY METHOD AND ELECTRONIC DEVICE", which is incorporated herein by reference in its entirety.

### TECHNICAL FIELD

This application relates to the field of electronic devices, and more specifically, to a display method and an electronic device.

### BACKGROUND

To increase a screen-to-body ratio of an electronic device, currently, an increasing quantity of electronic devices use punch-hole screens as screens. Currently, punch-hole locations on screens of most electronic devices are middle locations or side locations at the top of the screens, causing serious homogeneity and lack recognition. Consequently, personalized requirements of users cannot be met.

### SUMMARY

This application provides a display method. An electronic device may change a front-facing camera pattern based on an operation of a user, so that display diversity is enriched. In this way, the user can change the front-facing camera pattern to a pattern required by the user, so that use experience of the user can be improved.

According to a first aspect, a display method is provided. The method is applied to an electronic device, a screen of the electronic device is a punch-hole screen, a punch-hole location on the punch-hole screen is a first location on the screen, and a pattern corresponding to the punch-hole screen is a first pattern. The method includes: displaying a first interface in the first pattern; detecting a first operation of a user, and determining a second pattern, where the first operation includes an operation of changing a front-facing camera pattern or changing a theme by the user; displaying the first interface in the second pattern; and detecting a second operation of the user, and displaying a second interface in the second pattern, where the second operation is an operation of starting a first application, the second interface is an interface of the first application, and the second interface and the first interface do not belong to a same application.

In this embodiment of this application, the electronic device may change a front-facing camera pattern based on an operation of the user, so that display diversity is enriched. In this way, the user can change the front-facing camera pattern to a pattern required by the user, so that use experience of the user can be improved.

With reference to the first aspect, in some implementations of the first aspect, before detecting the first operation of the user, and determining the second pattern, the method further includes: displaying a third interface in response to an operation of waking up a voice assistant by the user; and displaying a first animation in the third interface, where the first animation is linked with the first pattern to implement first linkage effect.

In this embodiment of this application, the electronic device may link a front-facing camera pattern with an animation of an application, so that user experience can be improved.

With reference to the first aspect, in some implementations of the first aspect, after detecting the first operation of the user, and determining the second pattern, the method further includes: displaying the third interface in response to an operation of waking up the voice assistant by the user; and displaying a second animation in the third interface, where the second animation is linked with the second pattern to implement second linkage effect.

In this embodiment of this application, the electronic device may link a front-facing camera pattern with an animation of an application. When changing the front-facing camera pattern, the electronic device may also synchronously change animation effect of the application, so that display diversity is enriched, and user experience can be improved.

With reference to the first aspect, in some implementations of the first aspect, the method further includes: displaying a fourth interface in a third pattern in response to a third operation of the user, where the third operation is an operation of starting a second application, and the fourth interface is an interface of the second application.

In this embodiment of this application, the electronic device may use different front-facing camera patterns for different interfaces, so that display diversity is enriched, and user experience can be improved.

With reference to the first aspect, in some implementations of the first aspect, the method further includes: detecting an operation of starting a video type application or a reading type application by the user, and displaying a fifth interface in the first pattern, where the fifth interface is an interface of the video type application or the reading type application.

In this embodiment of this application, the electronic device may change a front-facing camera pattern based on a setting of the user, and a plurality of patterns are provided, so that display diversity is enriched. In this way, the user can change a front-facing camera appearance pattern to a pattern required by the user, so that use experience of the user can be improved. When displaying an interface of a video type application or a reading type application, the electronic device may temporarily remove a determined pattern and display the interface of the video type application or the reading type application in a pattern with a maximum screen-to-body ratio.

With reference to the first aspect, in some implementations of the first aspect, determining the second pattern includes: turning off a pixel at a second location on the screen to form the second pattern with the first location.

With reference to the first aspect, in some implementations of the first aspect, determining the second pattern includes: setting a color of the pixel at the second location on the screen to a first color to form the second pattern with the first location.

With reference to the first aspect, in some implementations of the first aspect, determining the second pattern includes: displaying a first image at the second location on the screen to form the second pattern with the first location.

With reference to the first aspect, in some implementations of the first aspect, determining the second pattern includes: displaying a third animation at the second location on the screen to form the second pattern with the first location.

According to a second aspect, an embodiment of this application provides an electronic device. The electronic device includes modules/units that perform the method according to the foregoing aspect or any one of the possible designs of the foregoing aspect. These modules/units may be implemented by hardware, or may be implemented by hardware by executing corresponding software.

According to a third aspect, an embodiment of this application provides a chip. The chip is coupled to a memory in an electronic device, and is configured to: invoke a computer program stored in the memory and perform the technical solutions according to the foregoing aspect and any one of the possible designs of the foregoing aspect in embodiments of this application. In embodiments of this application, "coupling" means that two components are directly or indirectly combined with each other.

According to a fourth aspect, an embodiment of this application provides a computer-readable storage medium. The computer-readable storage medium includes a computer program. When the computer program is run on an electronic device, the electronic device is enabled to perform the technical solutions according to the foregoing aspect and any one of the possible designs of the foregoing aspect.

According to a fifth aspect, an embodiment of this application provides a computer program. The computer program includes instructions. When the instructions are run on a computer, the computer is enabled to perform the technical solutions according to the foregoing aspect and any one of the possible designs of the foregoing aspect.

According to a sixth aspect, an embodiment of this application provides an electronic device. The electronic device includes one or more processors and one or more memories. The one or more memories store one or more computer programs. The one or more computer programs include instructions. When the instructions are executed by the one or more processors, the foregoing aspect or any one of the possible implementations of the foregoing aspect is performed.

According to a seventh aspect, an embodiment of this application provides a graphical user interface on an electronic device. The electronic device has a display, one or more memories, and one or more processors. The one or more processors are configured to execute one or more computer programs stored in the one or more memories. The graphical user interface includes a graphical user interface displayed when the electronic device performs the technical solutions according to the foregoing aspect and any one of the possible designs of the foregoing aspect.

For beneficial effects of the second aspect to the seventh aspect, refer to the beneficial effects of the first aspect. Details are not described again.

### BRIEF DESCRIPTION OF DRAWINGS

FIG. 1 is a diagram of a structure of an electronic device according to an embodiment of this application;
FIG. 2 is a block diagram of a software structure of an electronic device according to an embodiment of this application;
FIG. 3(a) to FIG. 3(h) show a first group of GUIs according to an embodiment of this application;
FIG. 4(a) to FIG. 4(c) show a second group of GUIs according to an embodiment of this application;
FIG. 5(a) to FIG. 5(e) show a third group of GUIs according to an embodiment of this application;
FIG. 6(a) to FIG. 6(d) show a fourth group of GUIs according to an embodiment of this application;
FIG. 7(a) to FIG. 7(e) show a fifth group of GUIs according to an embodiment of this application;
FIG. 8(a) to FIG. 8(c) show a sixth group of GUIs according to an embodiment of this application;
FIG. 9(a) to FIG. 9(d) show a seventh group of GUIs according to an embodiment of this application;
FIG. 10(a) and FIG. 10(b) show an eighth group of GUIs according to an embodiment of this application;
FIG. 11(a) to FIG. 11(c) show a ninth group of GUIs according to an embodiment of this application;
FIG. 12(a) to FIG. 12(d) show a tenth group of GUIs according to an embodiment of this application;
FIG. 13(a) to FIG. 13(c) show an eleventh group of GUIs according to an embodiment of this application;
FIG. 14(a) to FIG. 14(d) show a twelfth group of GUIs according to an embodiment of this application;
FIG. 15(a) to FIG. 15(d) show a thirteenth group of GUIs according to an embodiment of this application;
FIG. 16(a) to FIG. 16(c) show a fourteenth group of GUIs according to an embodiment of this application;
FIG. 17(a) to FIG. 17(c) show a fifteenth group of GUIs according to an embodiment of this application;
FIG. 18(a) to FIG. 18(d) show a sixteenth group of GUIs according to an embodiment of this application;
FIG. 19 is a schematic flowchart of a display method according to an embodiment of this application; and
FIG. 20 is a diagram of composition of an electronic device according to an embodiment of this application.

### DESCRIPTION OF EMBODIMENTS

Terms used in the following embodiments are merely intended to describe specific embodiments, but are not intended to limit this application. The singular expressions "one", "a", "this", and "the one" used in this specification and the appended claims of this application are also intended to include expressions such as "one or more", unless otherwise specified in the context clearly. It should be further understood that in the following embodiments of this application, "at least one" and "one or more" mean one, two, or more. The term "and/or" is used to describe an association relationship between associated objects and indicates that three relationships may exist. For example, A and/or B may indicate the following cases: Only A exists, both A and B exist, and only B exists, where A and B may be singular or plural. The character "/" generally indicates an "or" relationship between the associated objects.

Reference to "an embodiment", "some embodiments", or the like described in this specification indicates that one or more embodiments of this application include a specific feature, structure, or characteristic described with reference to the embodiments. Therefore, expressions such as "in an embodiment", "in some embodiments", "in some other embodiments", and "in other embodiments" that appear at different places in this specification do not necessarily mean reference to a same embodiment. Instead, the expressions mean "one or more but not all of embodiments", unless otherwise specifically emphasized in another manner. The terms "include", "comprise", "have", and their variants all mean "include but are not limited to", unless otherwise specifically emphasized in another manner.

The following describes an electronic device, and embodiments for using such an electronic device. In some embodiments, the electronic device may be a portable electronic device that further includes another function like a personal digital assistant function and/or a music player function, for example, a mobile phone, a tablet computer, or a wearable electronic device (for example, a smartwatch) having a wireless communication function. An example embodiment of the portable electronic device includes but is not limited to a portable electronic device using iOS^{®}, Android^{®}, Microsoft^{®}, or another operating system. The portable electronic device may alternatively be another portable electronic device, such as a laptop (Laptop). It should be further understood that, in some other embodiments, the foregoing electronic device may alternatively be a desktop computer instead of a portable electronic device.

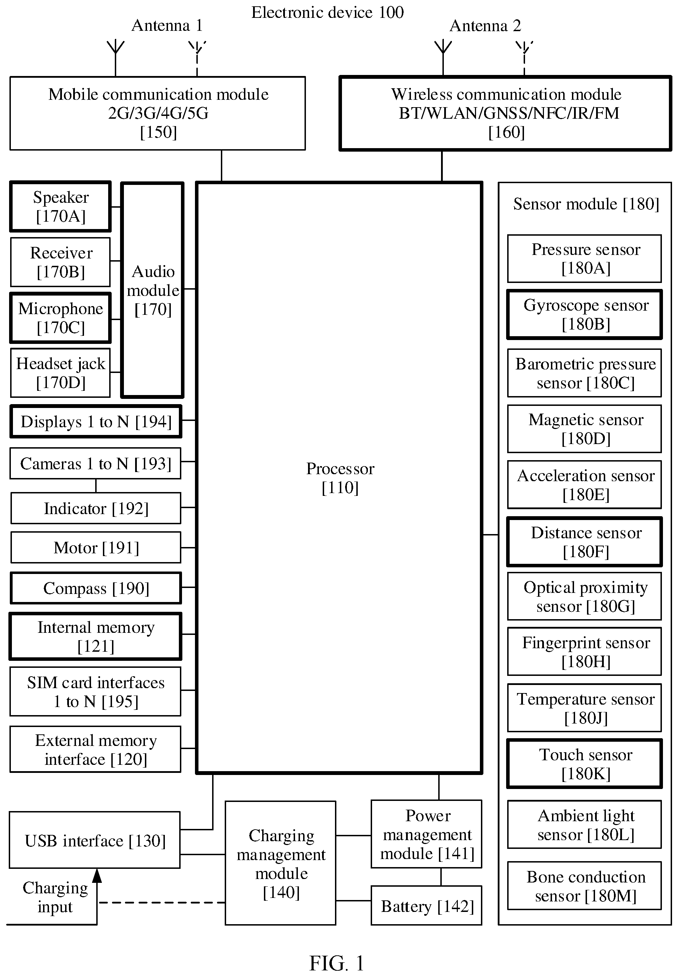

For example, FIG. 1 is a diagram of a structure of an electronic device 100. The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a compass 190, a motor 191, an indicator 192, a camera 193, a display 194, a subscriber identity module (subscriber identity module, SIM) card interface 195, and the like.

It can be understood that the structure shown in this embodiment of this application does not constitute a specific limitation on the electronic device 100. In some other embodiments of this application, the electronic device 100 may include more or fewer components than those shown in the figure, or have some components combined, or have some components split, or have a different component arrangement. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors. In some embodiments, the electronic device 100 may alternatively include one or more processors 110. The controller may generate an operation control signal based on instruction operation code and a time sequence signal, to complete control of instruction fetching and instruction execution. In some other embodiments, a memory may be further disposed in the processor 110, to store instructions and data. For example, the memory in the processor 110 may be a cache. The memory may store instructions or data just used or cyclically used by the processor 110. If the processor 110 needs to use the instructions or the data again, the instructions or the data may be directly invoked from the memory. This avoids repeated access and reduces waiting time of the processor 110, thereby improving data processing efficiency or instruction execution efficiency of the electronic device 100.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a SIM card interface, a USB interface, and/or the like. The USB interface 130 is an interface that conforms to a USB standard specification, and may be specifically a mini USB interface, a micro USB interface, a USB Type-C interface, or the like. The USB interface 130 may be configured to connect to a charger to charge the electronic device 100, or may be configured to transmit data between the electronic device 100 and a peripheral device. The USB interface 130 may alternatively be configured to connect to a headset, and play audio by using the headset.

It may be understood that an interface connection relationship between modules illustrated in this embodiment of this application is merely an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from a charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. The charging management module 140 supplies power to the electronic device through the power management module 141 while charging the battery 142.

The power management module 141 is configured to connect to the battery 142, the charging management module 140, and the processor 110. The power management module 141 receives an input of the battery 142 and/or the charging management module 140, and supplies power to the processor 110, the internal memory 121, an external memory, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same component.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be reused, to improve antenna utilization. For example, the antenna 1 may be reused as a diversity antenna of a wireless local area network. In some other embodiments, the antenna may be used in combination with a tuning switch.

The mobile communication module 150 may provide a wireless communication solution that includes 2G/3G/4G/5G or the like and that is applied to the electronic device 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering and amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 and at least some modules of the processor 110 may be disposed in a same component.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

The electronic device 100 may implement a display function by using the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may use a liquid crystal display (liquid crystal display, LCD), an organic light-emitting diode (organic light-emitting diode, OLED), an active-matrix organic light-emitting diode (active-matrix organic light-emitting diode, AMOLED), a flex light-emitting diode (flex light-emitting diode, FLED), a mini-LED, a micro-LED, a micro-OLED, a quantum dot light-emitting diode (quantum dot light-emitting diode, QLED), or the like. In some embodiments, the electronic device 100 may include one or more displays 194.

In some embodiments of this application, the display 194 in FIG. 1 is foldable when the display panel is made of a material such as an OLED, an AMOLED, or an FLED. Herein, that the display 194 may be bent means that the display may be bent to any angle at any part, and may be held at the angle. For example, the display 194 may be folded left and right from the middle. Alternatively, the display may be folded up and down from the middle.

The display 194 of the electronic device 100 may be a flexible display. Currently, a flexible display attracts much attention due to unique features and huge potential of the flexible display. Compared with a conventional screen, the flexible display has features of strong flexibility and bendability, and can provide a user with a new bendability-based interaction mode, to satisfy more requirements of the user on an electronic device. For an electronic device provided with a foldable display, the foldable display of the electronic device may be switched between a small screen in a folded form and a large screen in an unfolded form at any time. Therefore, a user uses a split-screen function more frequently on the electronic device provided with the foldable display.

The electronic device 100 can implement a photographing function by using the ISP, the camera 193, the video codec, the GPU, the display 194, the application processor, and the like.

The ISP is configured to process data fed back by the camera 193. For example, during photographing, a shutter is pressed, and light is transferred to a photosensitive element of the camera through a lens. An optical signal is converted into an electrical signal, and the photosensitive element of the camera transfers the electrical signal to the ISP for processing, to convert the electrical signal into a visible image. The ISP may further perform algorithm optimization on noise, brightness, and a skin color of the image. The ISP may further optimize parameters such as exposure and a color temperature of a photographed scene. In some embodiments, the ISP may be disposed in the camera 193.

The camera 193 is configured to capture a static image or a video. An optical image of an object is generated through the lens, and is projected onto the photosensitive element. The photosensitive element may be a charge-coupled device (charge-coupled device, CCD) or a complementary metal-oxide-semiconductor (complementary metal-oxide-semiconductor, CMOS) phototransistor. The photosensitive element converts an optical signal into an electrical signal, and then transfers the electrical signal to the ISP to convert the electrical signal into a digital image signal. The ISP outputs the digital image signal to the DSP for processing. The DSP converts the digital image signal into an image signal in a standard format such as RGB or YUV In some embodiments, the electronic device 100 may include one or more cameras 193.

The digital signal processor is configured to process a digital signal, and may process another digital signal in addition to the digital image signal. For example, when the electronic device 100 selects a frequency, the digital signal processor is configured to perform Fourier transform or the like on frequency energy.

The video codec is configured to compress or decompress a digital video. The electronic device 100 may support one or more video codecs. Therefore, the electronic device 100 may play or record videos in a plurality of coding formats, for example, moving picture experts group (moving picture experts group, MPEG)-1, MPEG-2, MPEG-3, MPEG-4, and the like.

The NPU is a neural-network (neural-network, NN) computing processor. The NPU quickly processes input information by referring to a structure of a biological neural network, for example, by referring to a transfer mode between human brain neurons; and may further continuously perform self-learning. The NPU may be used to implement an application such as intelligent cognition of the electronic device 100, for example, image recognition, facial recognition, voice recognition, or text understanding.

The external memory interface 120 may be configured to connect to an external storage card, for example, a micro SD card, to extend a storage capability of the electronic device 100. The external storage card communicates with the processor 110 through the external memory interface 120, to implement a data storage function. For example, files such as music and videos are stored in the external storage card.

The internal memory 121 may be configured to store one or more computer programs. The one or more computer programs include instructions. The processor 110 may run the instructions stored in the internal memory 121, to enable the electronic device 100 to perform the method provided in some embodiments of this application, various applications, data processing, and the like. The internal memory 121 may include a program storage area and a data storage area. The program storage area may store an operating system. The program storage area may further store one or more applications (for example, Gallery and Contacts), and the like. The data storage area may store data (for example, a photo and a contact) created during use of the electronic device 100, and the like. In addition, the internal memory 121 may include a high-speed random access memory, or may include a nonvolatile memory, for example, one or more magnetic disk storage components, a flash memory component, or a universal flash storage (universal flash storage, UFS). In some embodiments, the processor 110 may run the instructions stored in the internal memory 121 and/or the instructions stored in the memory disposed in the processor 110, to enable the electronic device 100 to perform the method provided in embodiments of this application, other applications, and data processing. The electronic device 100 may implement an audio function, for example, music playing or recording, by using the audio module 170, the speaker 170A, the receiver 170B, the microphone 170C, the headset jack 170D, the application processor, and the like.

The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The pressure sensor 180A is configured to sense a pressure signal, and may convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When force is applied to the pressure sensor 180A, capacitance between electrodes is changed. The electronic device 100 determines pressure intensity based on the change in the capacitance. When a touch operation is performed on the display 194, the electronic device 100 detects intensity of the touch operation by using the pressure sensor 180A. The electronic device 100 may further calculate a touch location based on a detection signal of the pressure sensor 180A. In some embodiments, touch operations that are performed at a same touch location but have different touch operation intensity may correspond to different operation instructions. For example, when a touch operation with touch operation intensity less than a first pressure threshold is performed on an icon of a messages application, an instruction for viewing an SMS message is executed. When a touch operation with touch operation intensity greater than or equal to the first pressure threshold is performed on the icon of the messages application, an instruction for creating a new SMS message is executed.

The gyroscope sensor 180B may be configured to determine a motion posture of the electronic device 100. In some embodiments, an angular velocity of the electronic device 100 around three axes (namely, axes X, Y, and Z) may be determined by using the gyroscope sensor 180B. The gyroscope sensor 180B may be configured to implement image stabilization during photographing. For example, when the shutter is pressed, the gyroscope sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyroscope sensor 180B may be further used in a navigation scenario and a somatic game scenario.

The acceleration sensor 180E may detect accelerations of the electronic device 100 in various directions (usually on three axes). When the electronic device 100 is still, a magnitude and a direction of gravity may be detected. The acceleration sensor 180E may be further configured to identify a posture of the electronic device, and is used in an application such as switching between a landscape mode and a portrait mode or a pedometer.

The ambient light sensor 180L is configured to sense ambient light brightness. The electronic device 100 may adaptively adjust brightness of the display 194 based on the sensed ambient light brightness. The ambient light sensor 180L may be further configured to automatically adjust white balance during photographing. The ambient light sensor 180L may further cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing strategy based on the temperature detected by the temperature sensor 180J. For example, when the temperature reported by the temperature sensor 180J exceeds a threshold, the electronic device 100 lowers performance of a processor near the temperature sensor 180J, to reduce power consumption for thermal protection. In some other embodiments, when the temperature is lower than another threshold, the electronic device 100 heats the battery 142, to avoid abnormal shutdown of the electronic device 100 caused by the low temperature. In some other embodiments, when the temperature is lower than still another threshold, the electronic device 100 boosts an output voltage of the battery 142, to avoid abnormal shutdown caused by the low temperature.

The touch sensor 180K is also referred to as a "touch panel". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor, to determine a type of the touch event. A visual output related to the touch operation may be provided by using the display 194. In some other embodiments, the touch sensor 180K may alternatively be disposed on a surface of the electronic device 100 at a location different from that of the display 194.

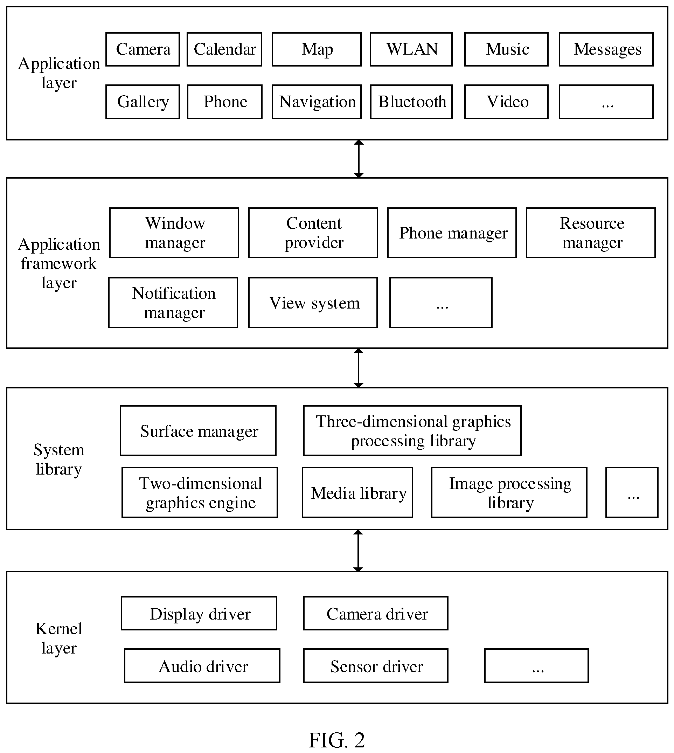

FIG. 2 is a block diagram of a software structure of an electronic device 100 according to an embodiment of this application. In a layered architecture, software is divided into several layers, and each layer has a clear role and task. The layers communicate with each other through a software interface. In some embodiments, an Android system is divided into four layers: an application layer, an application framework layer, an Android runtime (Android runtime) and a system library, and a kernel layer. The application layer may include a series of application packages.

As shown in FIG. 2, the application packages may include applications such as Camera, Gallery, Calendar, Phone, Map, Navigation, WLAN, Bluetooth, Music, Video, and Messages.

The application framework layer provides an application programming interface (application programming interface, API) and a programming framework for an application at the application layer, and the application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of a display, and determine whether there is a status bar, whether to lock a screen or take a screenshot, or the like.

The content provider is configured to: store and obtain data, and enable the data to be accessed by an application. The data may include a video, an image, audio, calls that are made and answered, a browsing history and bookmarks, a phone book, and the like.

The view system includes visual controls such as a control for displaying a text and a control for displaying an image. The view system may be configured to construct an application. A display interface may include one or more views. For example, a display interface including an SMS message notification icon may include a text display view and an image display view.

The phone manager is configured to provide a communication function for the electronic device 100, for example, management of a call status (including answering, declining, or the like).

The resource manager provides various resources for an application, such as a localized character string, an icon, an image, a layout file, and a video file.

The notification manager enables an application to display notification information in a status bar, and may be configured to convey a notification message. The notification manager may automatically disappear after a short pause without requiring user interaction. For example, the notification manager is configured to notify download completion, give a message notification, and the like. The notification manager may alternatively be a notification that appears in a top status bar of the system in a form of graph or scroll bar text, for example, a notification of an application running in the background, or may be a notification that appears on the screen in a form of dialog window. For example, text information is prompted in the status bar, an alert tone is made, the electronic device vibrates, or an indicator blinks.

The system library may include a plurality of functional modules, for example, a surface manager (surface manager), a media library (media library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, static image files, and the like. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, compositing, layer processing, and the like.

The 2D graphics engine is a drawing engine for 2D drawing.

The kernel layer is a layer between hardware and software. The kernel layer includes at least a display driver, a camera driver, an audio driver, and a sensor driver.

To improve a screen-to-body ratio of an electronic device, currently, an increasing quantity of electronic devices use punch-hole screens as screens. Currently, punch-hole locations on screens of most electronic devices are middle locations or side locations above the screens, are highly homogenized and lack recognition, and cannot meet personalized requirements of users. Based on this, embodiments of this application provide a display method, to adjust a pixel on a screen to form different patterns with a punch-hole location, so that different preferences of a user can be met, user experience can be improved, and recognition on a screen side of an electronic device can be enhanced.

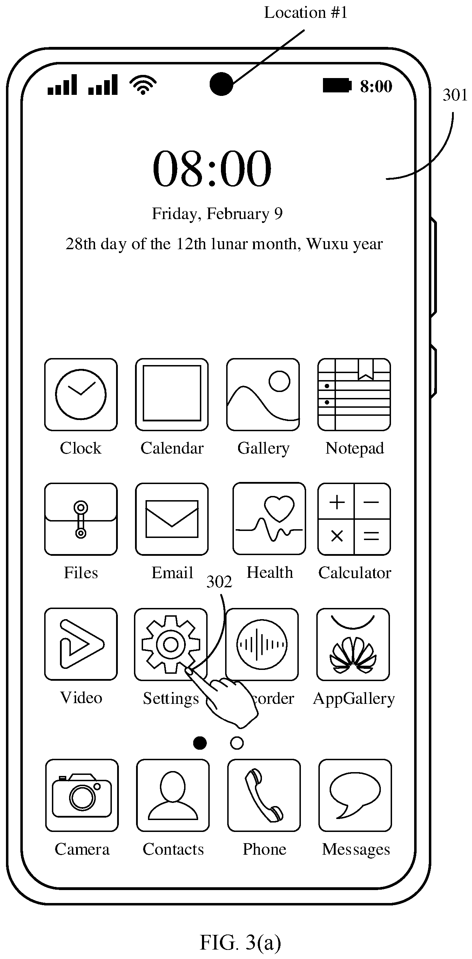

FIG. 3(a) to FIG. 3(h) show a first group of graphical user interfaces (graphical user interfaces, GUIs) according to an embodiment of this application.

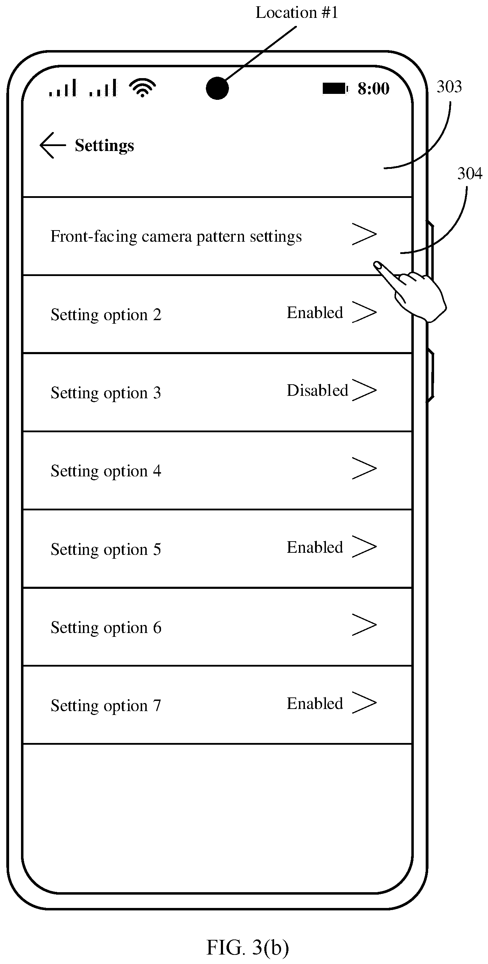

As shown in FIG. 3(a), a punch-hole location on a screen of an electronic device is a middle location at the top of the screen, and is referred to as a location #1 below. The electronic device displays an interface 301, and the interface 301 is a home screen. The electronic device may display icons of one or more applications in the interface 301. In response to detecting an operation of tapping a settings icon 302 by a user, the electronic device may display a GUI shown in FIG. 3(b).

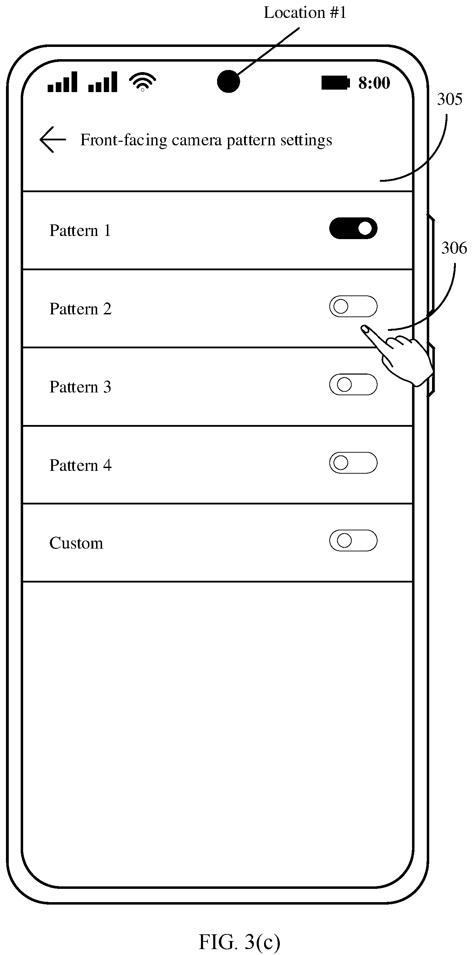

As shown in FIG. 3(b), in response to detecting the operation of tapping the settings icon 302 by the user, the electronic device may display an interface 303. The interface 303 is a setting interface, and the interface 303 may include entrances to different setting sub-interfaces. For example, in response to detecting that the user taps Front-facing camera settings 304, the electronic device may display a GUI shown in FIG. 3 (c).

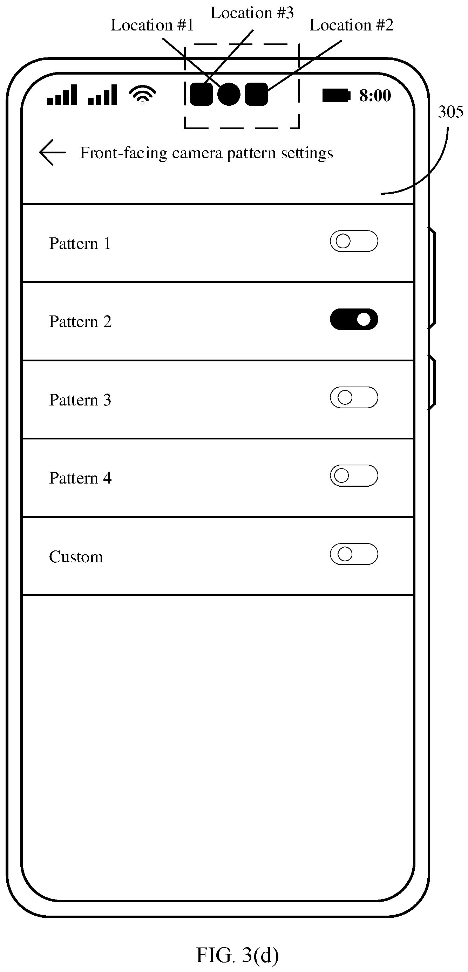

As shown in FIG. 3(c) and FIG. 3(d), in response to detecting the operation of tapping the Front-facing camera pattern settings 304 by the user, the electronic device may display an interface 305. The electronic device may display a plurality of pattern settings in the interface 305. For example, a front-facing camera pattern corresponding to a pattern 1 is a pattern shown in FIG. 3(a) to FIG. 3(c), and the pattern 1 may be understood as a pattern corresponding to a punch-hole screen of the electronic device. When detecting an operation of tapping a control 306 of a pattern 2 by the user, the electronic device may turn off pixels at a location #2 and a location #3 in response to the operation, to form the pattern 2 with a punch-hole at the location #1.

It may be understood that, after setting a pattern, the electronic device may keep the pattern when displaying another interface.

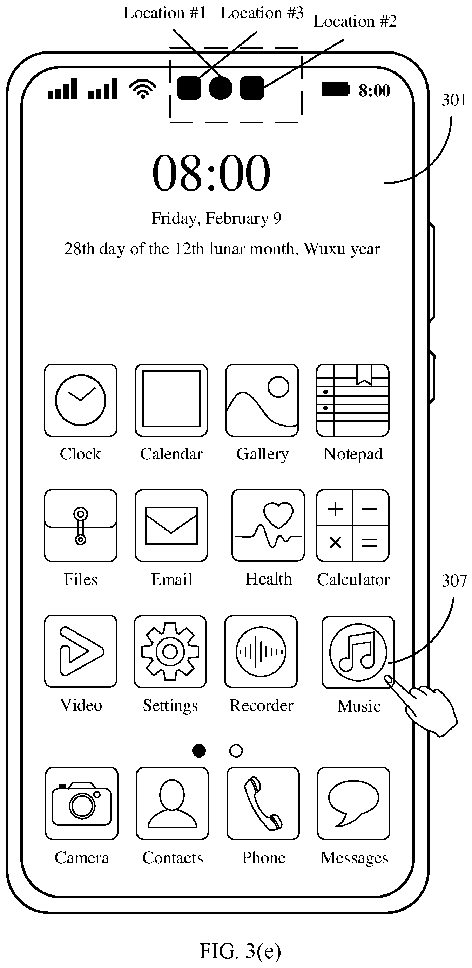

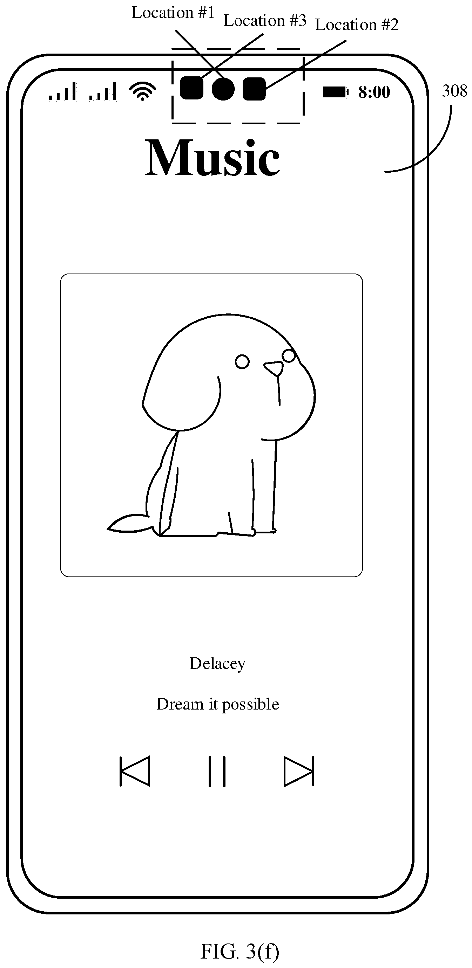

For example, as shown in FIG. 3(e) and FIG. 3(f), after setting the pattern, the electronic device may return to the interface 301. A difference from FIG. 3(a) lies in that the electronic device keeps the pixels at the location #2 and the location #3 in an off state when displaying the interface 301. In response to detecting an operation of tapping an icon 307 of a music application by the user, the electronic device may display an interface 308. The electronic device may still keep the pixels at the location #2 and the location #3 in the off state when displaying the interface 308.

It should be noted that the pattern 2 shown in FIG. 3(c) to FIG. 3(f) is merely an example, and shall not be understood as a specific limitation on this application. A plurality of different patterns may be provided in embodiments of this application.

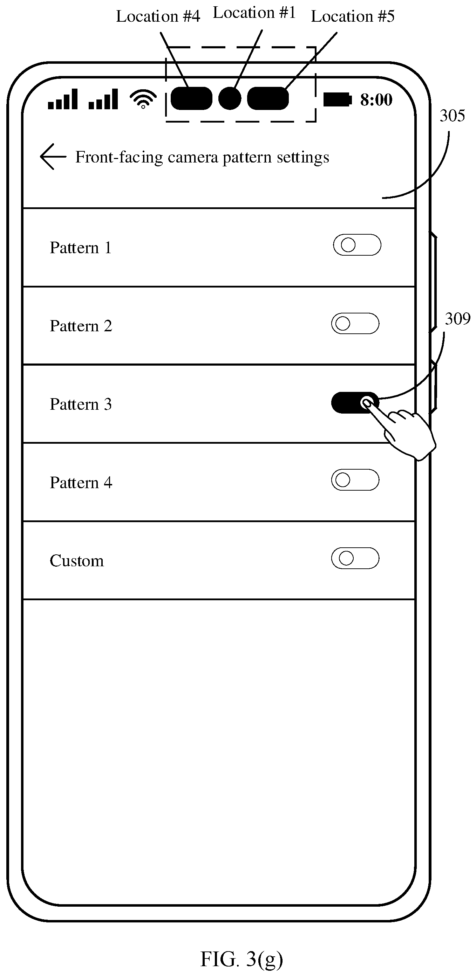

For example, as shown in FIG. 3(g), in response to detecting an operation of tapping a control 309 of a pattern 3 by the user, the electronic device may turn off pixels at a location #4 and a location #5 to form the pattern 3 with the punch-hole location at the location #1.

Similarly, after determining the pattern 3, the electronic device may keep the pattern when displaying another interface.

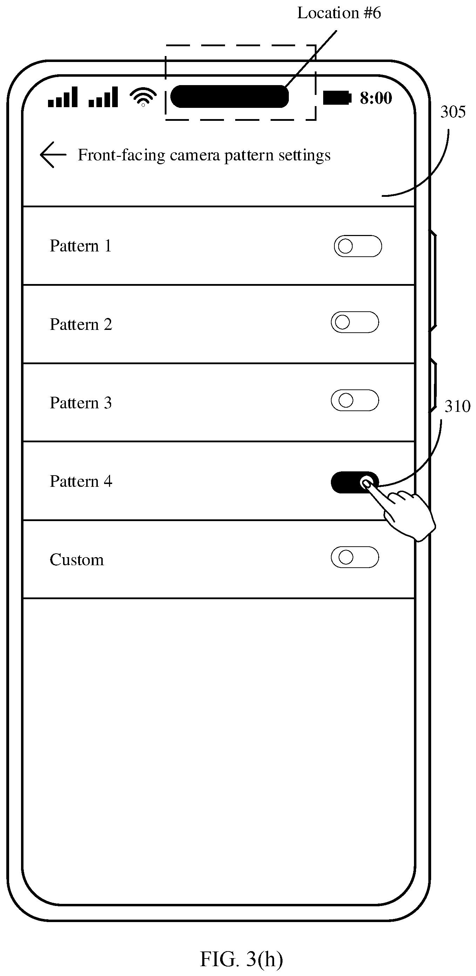

For another example, as shown in FIG. 3(h), in response to detecting an operation of tapping a control 310 of a pattern 3 by the user, the electronic device may turn off a pixel at a location #6 to form the pattern 4 with the punch-hole location at the location #1.

In this embodiment of this application, the electronic device may change a front-facing camera pattern based on a setting of the user, so that display diversity is enriched. In this way, the user can change the front-facing camera pattern to a pattern required by the user, so that use experience of the user can be improved.

In this embodiment of this application, the electronic device may turn off a pixel at a location on the screen based on an operation of the user, to form a new pattern with the punch-hole location. In some other examples, the electronic device may alternatively set colors of pixels at one or more locations on the screen based on an operation of the user, to form a new pattern with the punch-hole location.

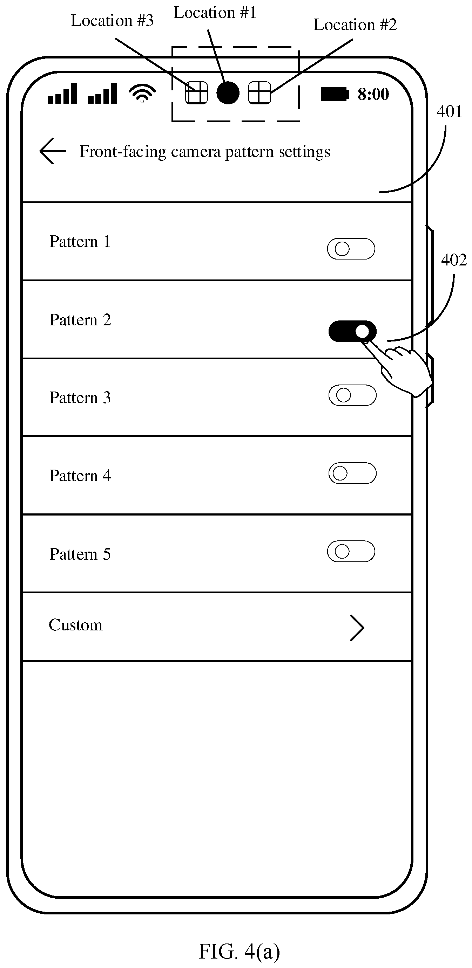

FIG. 4(a) to FIG. 4(c) show a second group of GUIs according to an embodiment of this application.

As shown in FIG. 4(a), the electronic device displays an interface 401, and the electronic device may display a plurality of pattern settings in the interface 401. In response to detecting an operation of tapping a control 402 of a pattern 2 by the user, the electronic device may set pixels at a location #2 and a location #3 to a color #1.

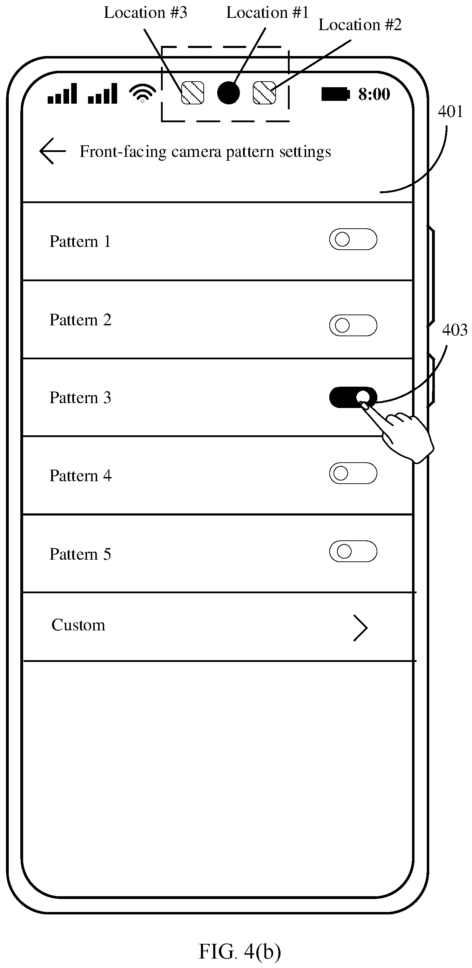

As shown in FIG. 4(b), in response to detecting an operation of tapping a control 403 of a pattern 3 by the user, the electronic device sets the pixels at the location #2 and the location #3 to a color #2.

In this embodiment of this application, the electronic device may change a front-facing camera pattern based on a setting of the user, and a plurality of patterns are provided, so that display diversity is enriched. In this way, the user can change the front-facing camera pattern to a pattern required by the user, so that use experience of the user can be improved.

It may be understood that a color of the foregoing location is not limited in embodiments of this application. For example, the color of the foregoing location may be black, white, or the like.

In the examples shown in FIG. 4(a) and FIG. 4(b), the electronic device may change colors of pixels at a plurality of locations on the screen. In some other examples, the electronic device may change a color of a pixel at one location.

Similarly, after setting a pattern, the electronic device may keep the set pattern when displaying another interface.

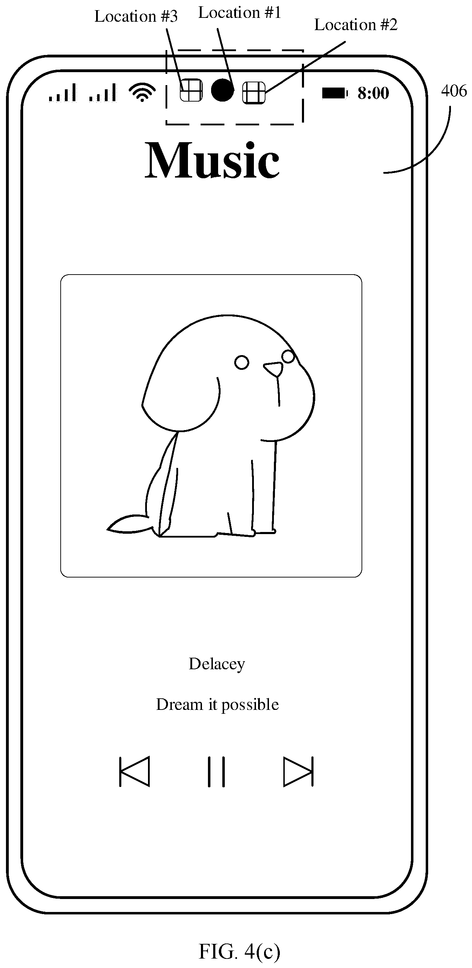

For example, the electronic device determines the pattern 2. As shown in (c) in FIG. 4, the electronic device may display an interface 406, and the interface 406 is an interface of a music application. The electronic device may keep colors of the pixels at the location #2 and the location #3 in the color #1 when displaying the interface 406.

It should be noted that in the examples shown in FIG. 4(a) to FIG. 4(c), different fills may represent different colors.

In the foregoing examples shown in FIG. 3(a) to FIG. 4(c), the electronic device may turn off pixels at one or more locations on the screen or set colors of pixels at one or more locations on the screen to form different patterns with the punch-hole location. However, embodiments of this application are not limited thereto. In some other examples, the electronic device may alternatively set different images at one or more locations based on an operation of the user, to form different patterns with the punch-hole location.

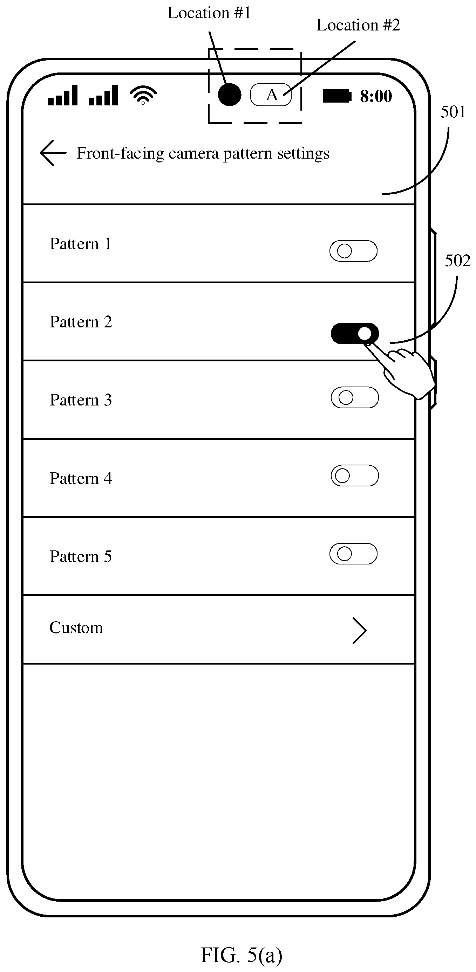

FIG. 5(a) to FIG. 5(e) show a third group of GUIs according to an embodiment of this application.

As shown in FIG. 5(a), the electronic device displays an interface 501, and the electronic device may display a plurality of pattern settings in the interface 501. In response to detecting an operation of tapping a control 502 of a pattern 2 by the user, the electronic device may display an image #1 at a location #2. In the figure, A represents the image #1.

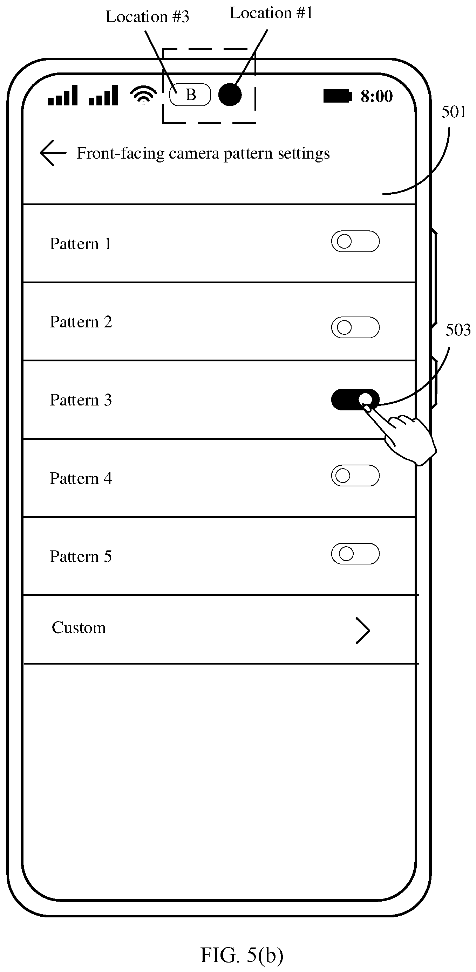

As shown in FIG. 5(b), in response to detecting an operation of tapping a control 503 of a pattern 3 by the user, the electronic device displays an image #2 at a location #3. In the figure, B represents the image #2.

In this embodiment of this application, the electronic device may change a front-facing camera pattern setting based on a setting of the user, and a plurality of patterns are provided, so that display diversity is enriched. In this way, the user can change a front-facing camera pattern to a pattern required by the user, so that use experience of the user can be improved.

In the examples shown in FIG. 5(a) and FIG. 5(b), the electronic device may display an image at one location on the screen. In some other examples, the electronic device may simultaneously display a same image or different images at a plurality of locations on the screen.

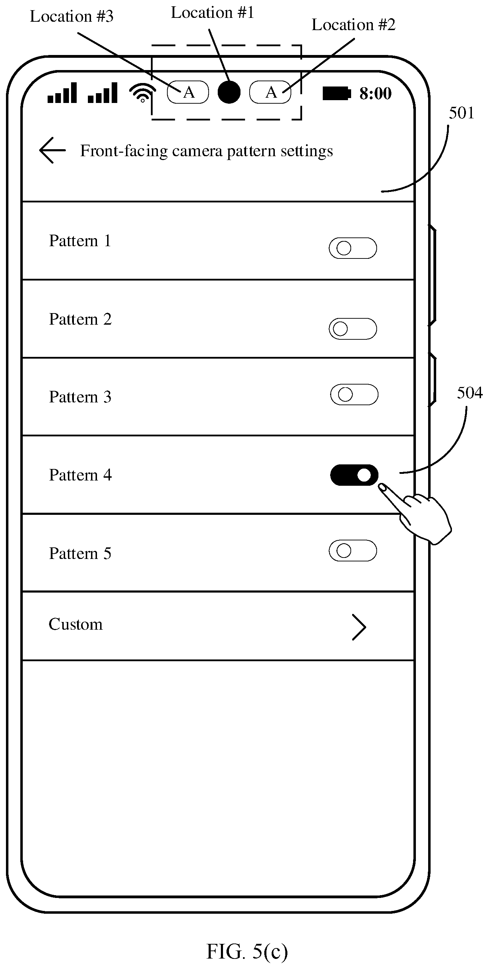

As shown in FIG. 5(c), in response to detecting an operation of tapping a control 504 of a pattern 4 by the user, the electronic device may display the image #1 at the location #2 and the location #3.

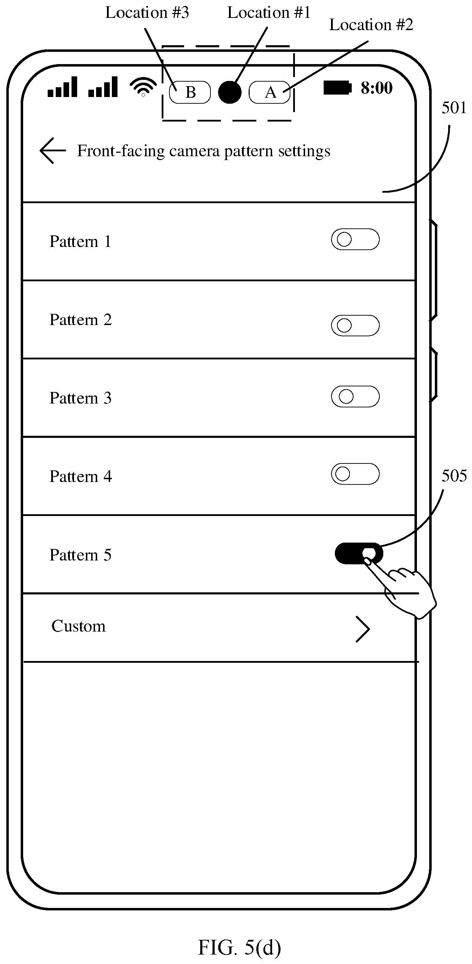

As shown in FIG. 5(d), in response to detecting an operation of tapping a control 505 of a pattern 5 by the user, the electronic device may display the image #1 at the location #2, and display the image #2 at the location #3.

Similarly, after setting a pattern, the electronic device may keep the set pattern when displaying another interface.

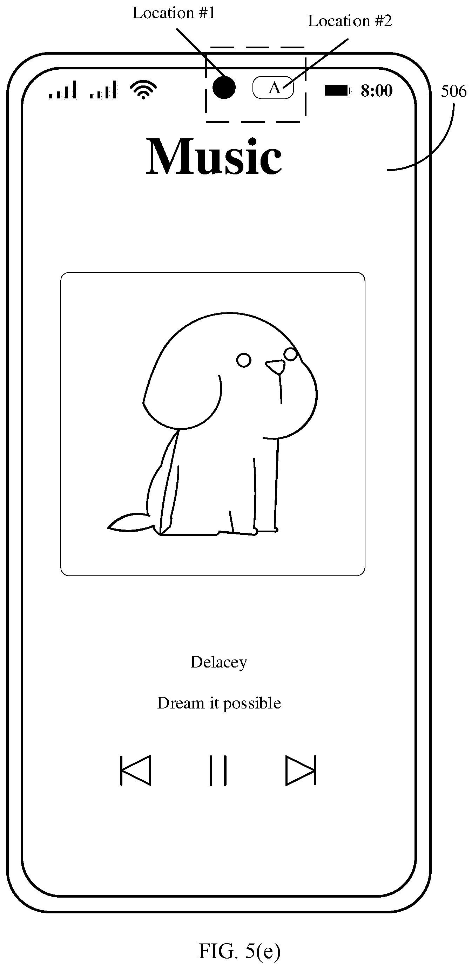

For example, the electronic device determines the pattern 2. As shown in FIG. 5(e), the electronic device may display an interface 506, and the interface 506 is an interface of a music application. The electronic device may display the image #1 at the location #2 when displaying the interface 506.

In the examples shown in FIG. 5(a) to FIG. 5(e), the electronic device may display an image at one or more locations on the screen to form different patterns with the punch-hole location. In some other examples, the electronic device may alternatively display an animation at one or more locations on the screen to form different patterns with the punch-hole location.

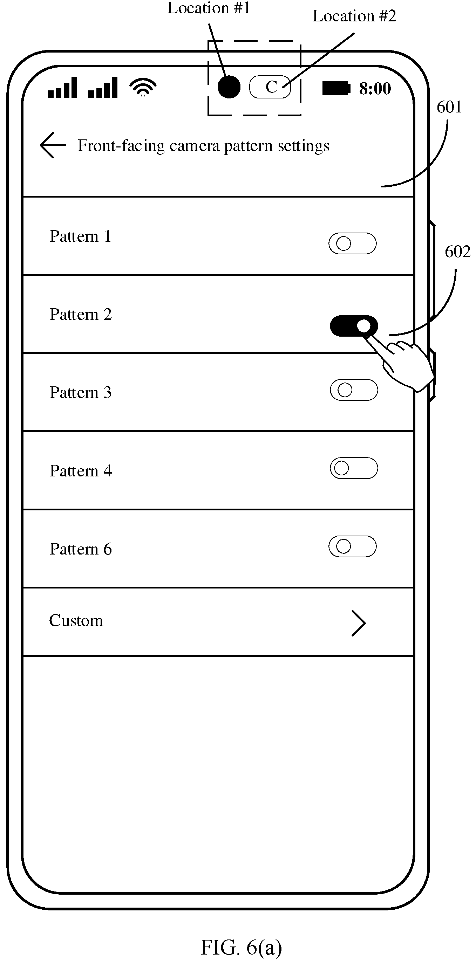

FIG. 6(a) to FIG. 6(d) show a fourth group of GUIs according to an embodiment of this application.

As shown in FIG. 6(a), the electronic device displays an interface 601, and the electronic device may display a plurality of pattern settings in the interface 601. In response to detecting an operation of tapping a control 602 of a pattern 2 by the user, the electronic device may display an animation #1 at a location #2. In the figure, C represents the animation #1.

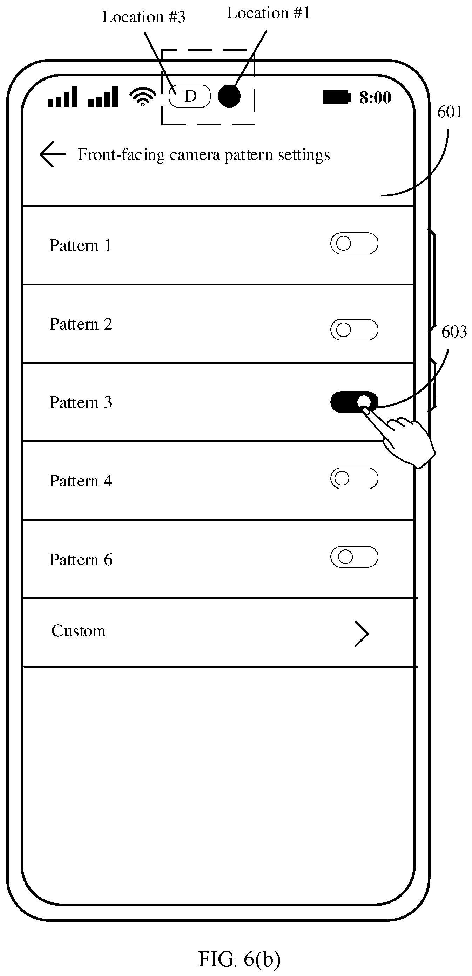

As shown in FIG. 6(b), in response to detecting an operation of tapping a control 603 of a pattern 3 by the user, the electronic device displays an animation #2 at a location #3. In the figure, D represents the animation #2.

In this embodiment of this application, the electronic device may change a front-facing camera pattern based on a setting of the user, and a plurality of patterns are provided, so that display diversity is enriched. In this way, the user can change the front-facing camera pattern to a pattern required by the user, so that use experience of the user can be improved.

In the examples shown in FIG. 6(a) and FIG. 6(b), the electronic device may display an animation at one location on the screen. In some other examples, the electronic device may simultaneously display a same animation or different animations at a plurality of locations on the screen.

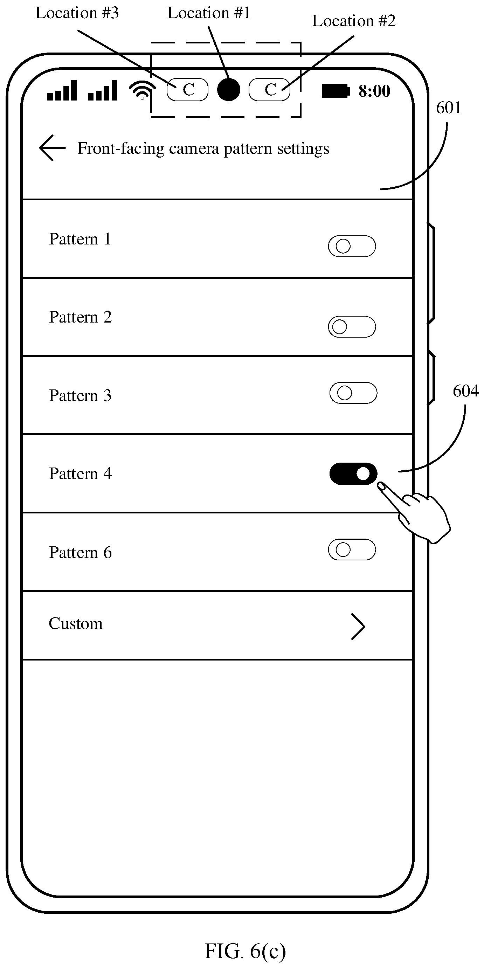

As shown in FIG. 6(c), in response to detecting an operation of tapping a control 604 of a pattern 4 by the user, the electronic device may display the animation #1 at the location #2 and the location #3.

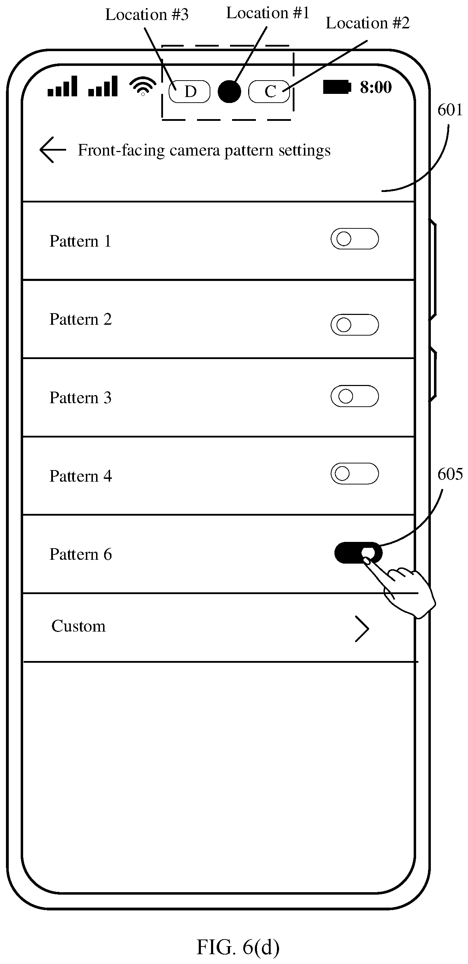

As shown in FIG. 6(d), in response to detecting an operation of tapping a control 605 of a pattern 5 by the user, the electronic device may display the animation #1 at the location #2, and display the animation #2 at the location #3.

Similarly, after setting a pattern, the electronic device may keep the set pattern when displaying another interface. For specific descriptions, refer to the foregoing descriptions. Details are not described herein again.

In the examples shown in FIG. 3(a) to FIG. 6(d), the electronic device may control, based on an operation of determining a pattern by the user, one or more locations on the screen to turn off pixels or display content to form different patterns with the punch-hole location, where the formed pattern is preset by a system. In some other examples, the electronic device may alternatively control, in response to an operation of customizing a pattern by the user, one or more locations on the screen to turn off pixels or display content to form different patterns with the punch-hole location.

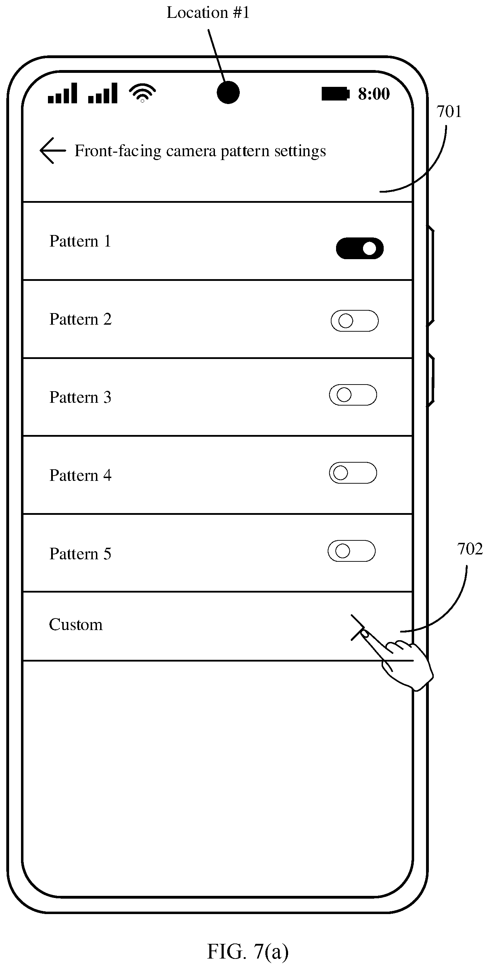

FIG. 7(a) to FIG. 7(e) show a fifth group of GUIs according to an embodiment of this application.

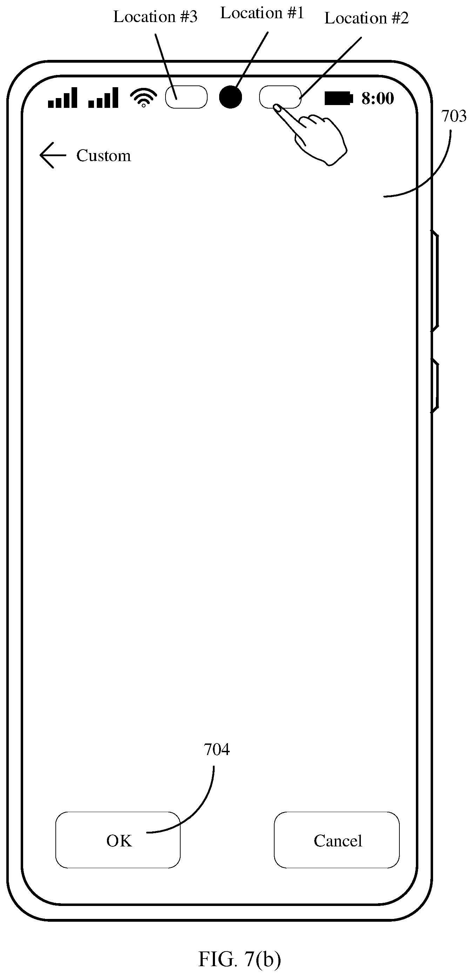

As shown in FIG. 7(a), the electronic device displays an interface 701, and the electronic device may display a plurality of pattern setting controls and a custom control 702 in the interface 701. In response to detecting an operation of tapping the custom control 702 by the user, the electronic device may display a GUI shown in FIG. 7(b).

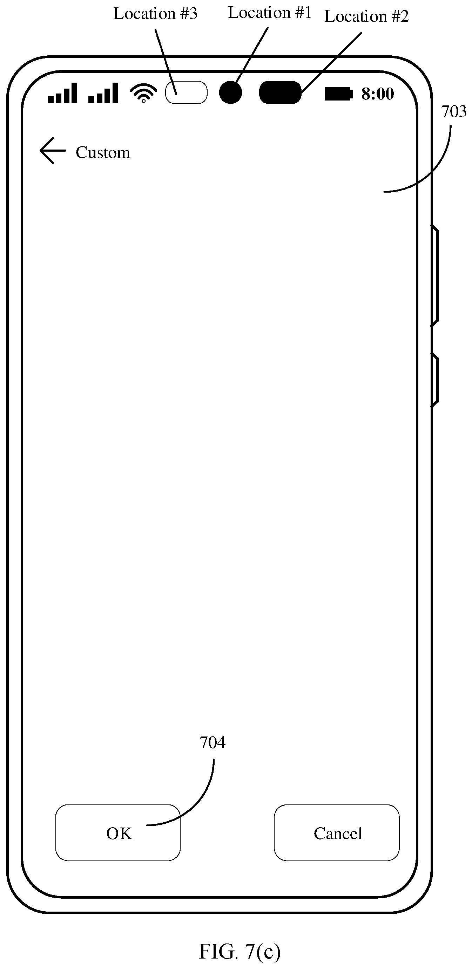

As shown in FIG. 7(b) and FIG. 7(c), the electronic device displays an interface 703, and the electronic device may mark a plurality of locations in the interface 703. The plurality of locations are locations at which a pixel may be turned off. In response to detecting an operation of selecting a location #2 by the user, the electronic device may turn off a pixel at the location #2.

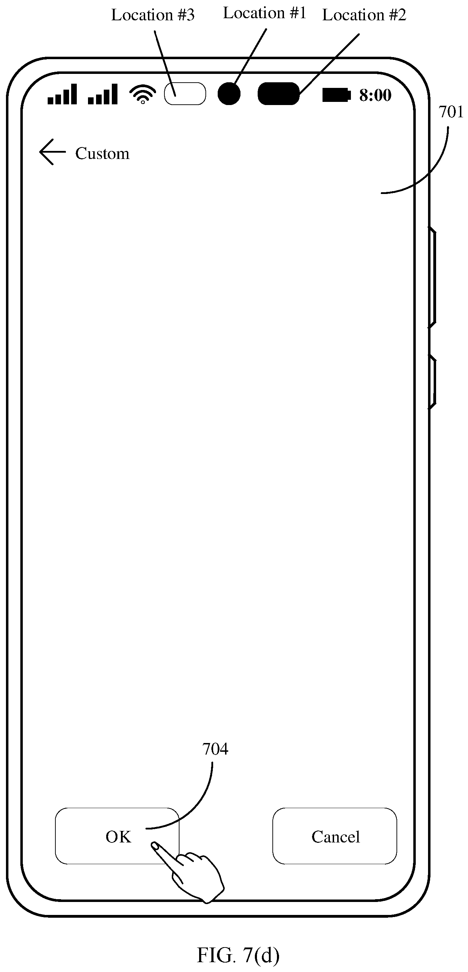

As shown in FIG. 7(d), in response to detecting an operation of tapping an OK control 704 in the interface 703 by the user, the electronic device may save a pattern customized by the user.

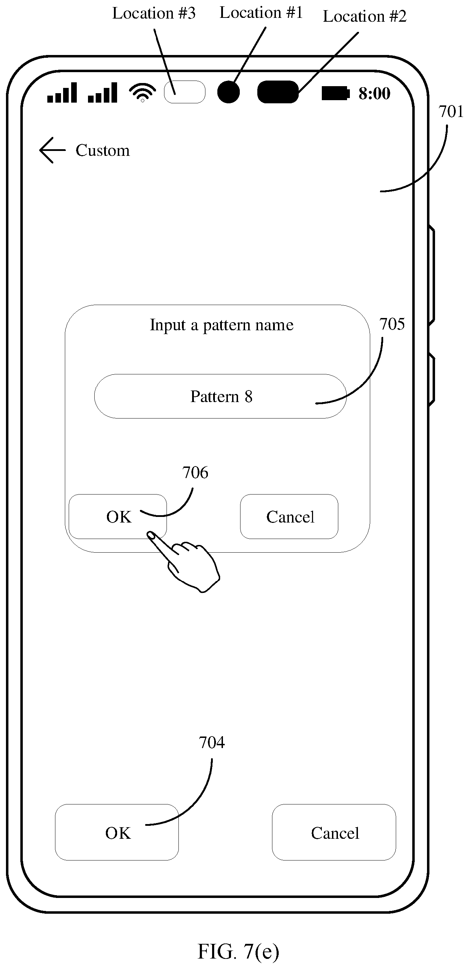

Optionally, in some examples, as shown in FIG. 7(e), before saving the pattern customized by the user in response to detecting the operation of tapping the OK control 704 in the interface 703 by the user, the electronic device may display an option box 705. The option box 705 is used to name the pattern customized by the user. For example, as shown in FIG. 7(e), in response to an operation of performing inputting in the option box 705 and tapping an OK control 706 by the user, the electronic device names, as a pattern 8, the pattern customized by the user.

Similarly, after determining the pattern customized by the user, the electronic device may keep the pattern customized by the user when displaying another interface. For specific descriptions, refer to the foregoing descriptions. Details are not described herein again.

In this embodiment of this application, the electronic device may change a front-facing camera pattern based on a setting customized by the user, so that display diversity is enriched. In this way, the user can change the front-facing camera pattern to a pattern required by the user, so that use experience of the user can be improved.

In the GUIs shown in FIG. 7(a) to FIG. 7(e), the electronic device may turn off, based on a setting customized by the user, pixels at one or more locations on the screen to form different patterns with the punch-hole location. In some other examples, the electronic device may alternatively display an image or an animation at one or more locations on the screen based on a setting customized by the user.

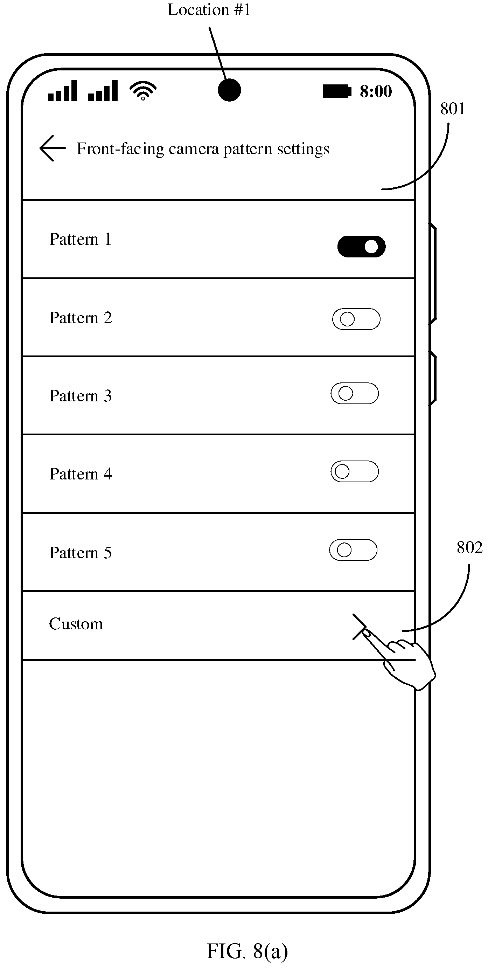

FIG. 8(a) to FIG. 8(c) show a sixth group of GUIs according to an embodiment of this application.

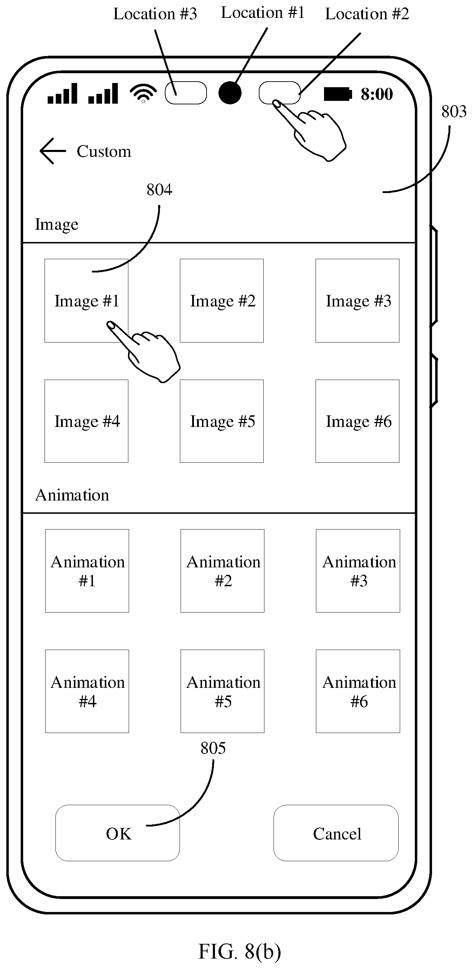

As shown in FIG. 8(a), the electronic device displays an interface 801, and the electronic device may display a plurality of pattern setting controls and a custom control 802 in the interface 801. In response to detecting an operation of tapping the custom control 802 by the user, the electronic device may display a GUI shown in FIG. 8(b).

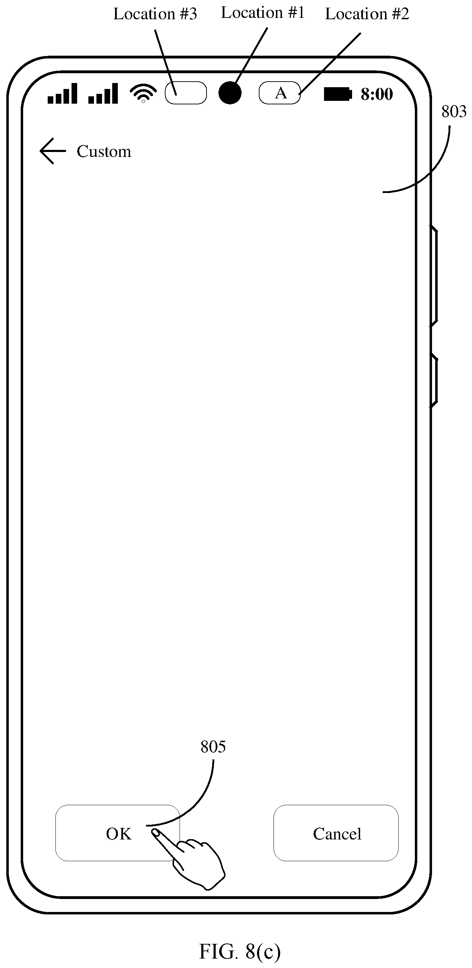

As shown in FIG. 8(b), the electronic device displays an interface 803, and the electronic device may mark a plurality of locations in the interface 803. The plurality of locations are locations at which an image may be displayed. The interface 803 may further include one or more images or animations, and the one or more images or animations may be preset by a system and/or uploaded by a user. In response to detecting an operation of tapping a location #2 and a control 804 of an image #1 by the user, the electronic device may display a GUI shown in FIG. 8(c). It may be understood that a sequence in which the user taps the location #2 and taps the control 804 of the image #1 is not limited. The user may first tap the location #2 and then tap the control 804 of the image #1, or may first tap the control 804 of the image #1 and then tap the location #2.

As shown in FIG. 8(c), in response to detecting an operation of tapping the control 804 of the image #1 by the user, the electronic device may display the image #1 at the location #2. In response to detecting an operation of tapping an OK control 805 by the user, the electronic device may save a pattern customized by the user. In the figure, A represents the image #1.

In this embodiment of this application, the electronic device may change a front-facing camera pattern setting based on a setting customized by the user, so that display diversity is enriched. In this way, the user can change a front-facing camera pattern to a pattern required by the user, so that use experience of the user can be improved.

Optionally, in some examples, the electronic device may further name, based on an input of the user, the pattern customized by the user. For specific descriptions, refer to the descriptions of FIG. 7(a) to FIG. 7(e). For brevity, details are not described herein again.

In the foregoing examples shown in FIG. 3(a) to FIG. 8(c), the electronic device may determine a pattern based on a setting of the user, and may keep the pattern when displaying another interface. In some other examples, a front-facing camera pattern may be linked with a theme of the electronic device. When the electronic device changes the theme, the front-facing camera pattern may be correspondingly changed.

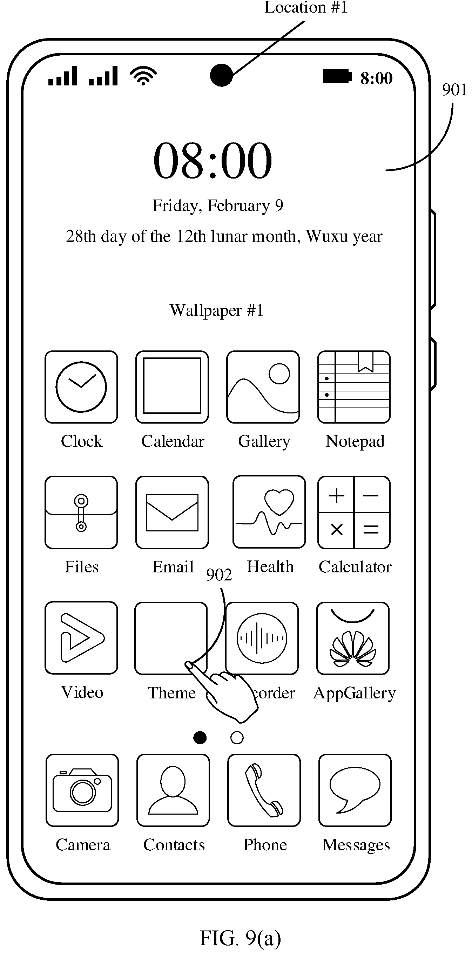

FIG. 9(a) to FIG. 9(d) show a seventh group of GUIs according to an embodiment of this application.

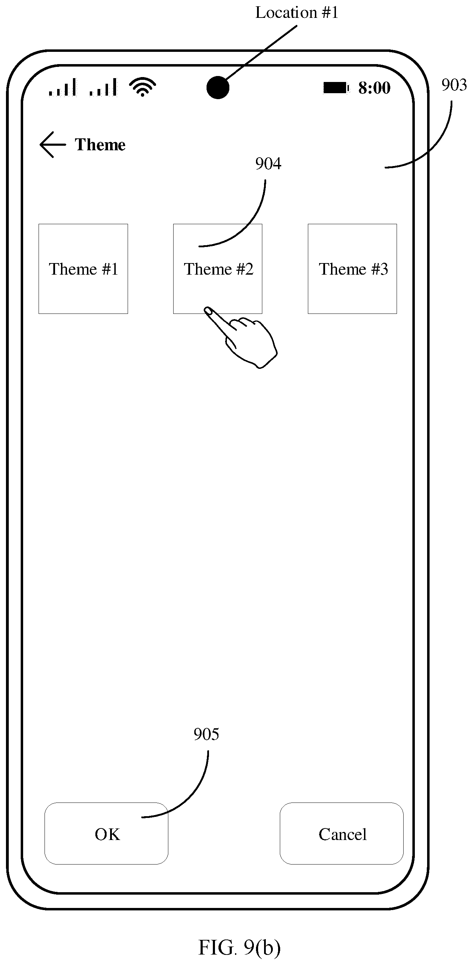

As shown in FIG. 9(a), the electronic device displays an interface 901, and the interface 901 may be a home screen. The electronic device displays the interface 901 in a theme #1. For example, wallpaper corresponding to the theme #1 is wallpaper #1, and a front-facing camera pattern corresponding to the theme #1 may be a pattern 1, that is, a display manner in which pixels at one or more locations on the screen are unchanged. In response to detecting an operation of tapping a theme icon 902 by the user, the electronic device may display a GUI shown in FIG. 9(b).

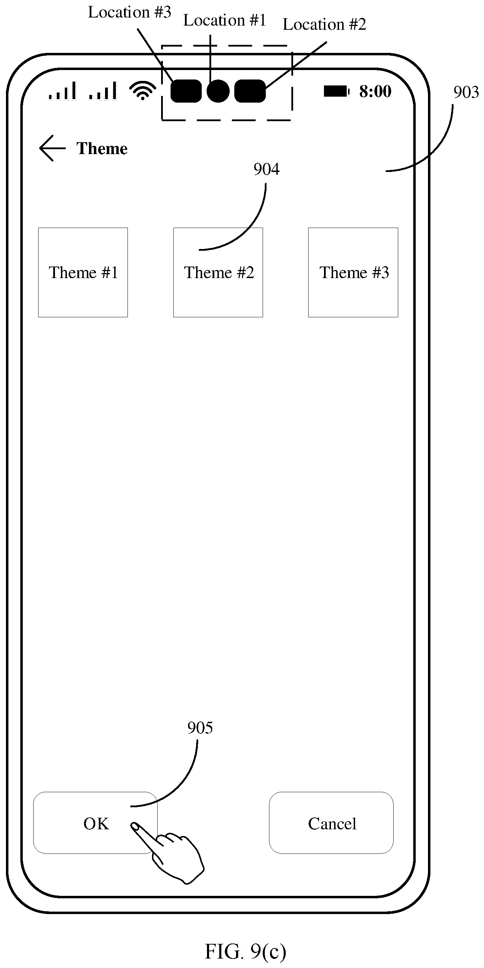

As shown in FIG. 9(b), in response to detecting the operation of tapping the theme icon 902 by the user, the electronic device may display an interface 903. The interface 903 is a theme interface, and the interface 903 may include controls corresponding to a plurality of different themes. In response to detecting an operation of tapping a control 904 of a theme #2 by the user, the electronic device may display a GUI shown in FIG. 9(c).

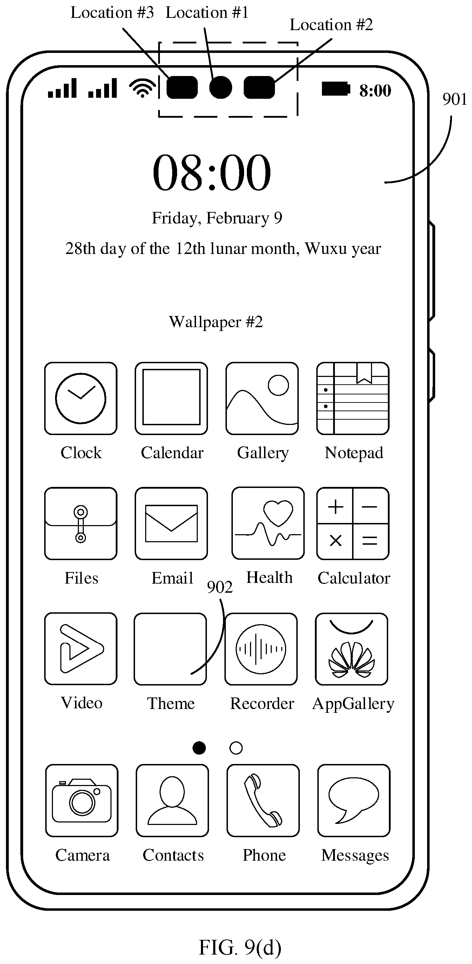

As shown in FIG. 9(c), in response to detecting the operation of tapping the control 904 of the theme #2 by the user, where a front-facing camera pattern corresponding to the theme #2 may be a pattern 2, the electronic device turns off pixels at a location #2 and a location #3. In response to detecting an operation of tapping an OK control 905 by the user, the electronic device may save the theme #2 and display a GUI shown in FIG. 9(d).

As shown in FIG. 9(d), in response to detecting the operation of tapping the OK control 905 by the user, the electronic device may return to the interface 901. The electronic device may display the interface 901 in the pattern 2, and wallpaper corresponding to the theme #2 is wallpaper #2.

In this embodiment of this application, when changing a theme, the electronic device may correspondingly adjust a front-facing camera pattern based on a changed theme, so that display diversity is enriched. In this way, the user can change the front-facing camera pattern to a pattern required by the user, so that use experience of the user can be improved.

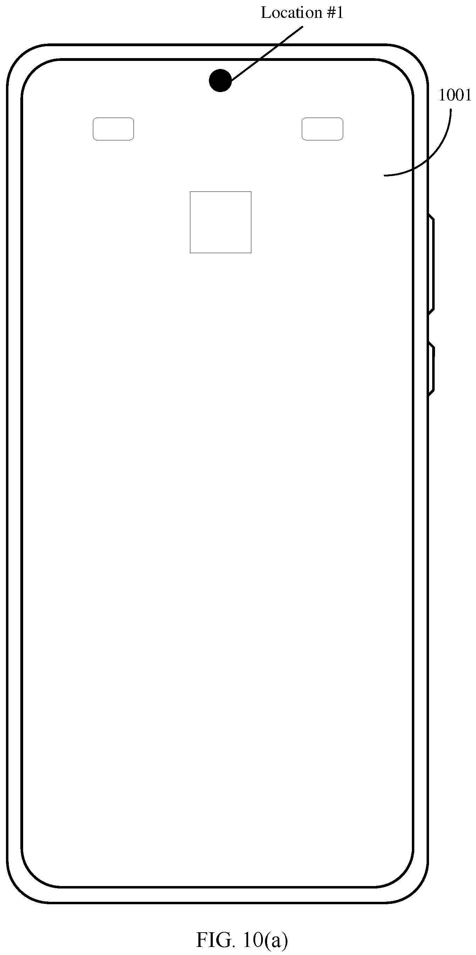

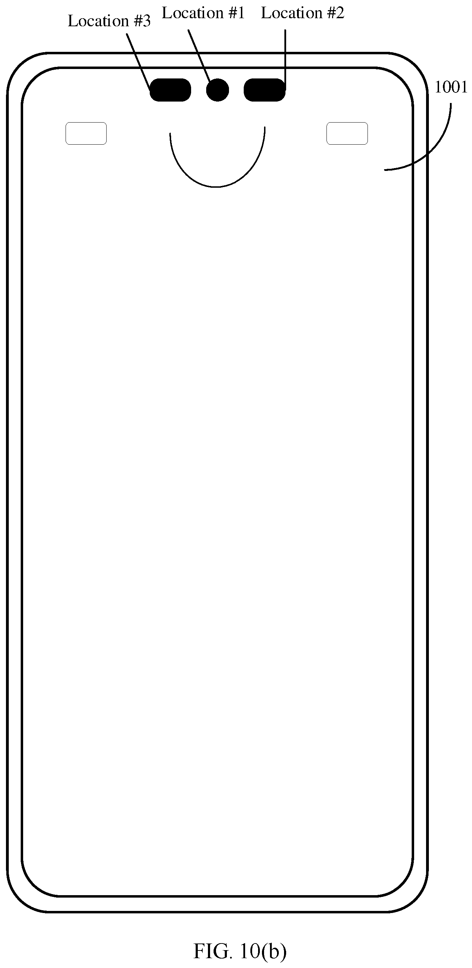

In an embodiment of this application, after the electronic device completes a front-facing camera pattern, the pattern may be linked with an animation of an application. With reference to FIG. 10(a) and FIG. 10(b), an example in which the application is a voice assistant is used below to describe a case in which different patterns may correspond to different animations when the voice assistant is woken up.

FIG. 10(a) and FIG. 10(b) show an eighth group of GUIs according to an embodiment of this application.

As shown in FIG. 10(a), it is assumed that a front-facing camera pattern of the electronic device is a pattern #1. When detecting an operation of waking up the voice assistant by the user, the electronic device may display an interface 1001 and display an animation #1 in the interface 1001 in response to the operation during wake-up of the voice assistant.

As shown in FIG. 10(b), the electronic device changes the front-facing camera pattern to a pattern #2. When detecting an operation of waking up the voice assistant by the user, the electronic device may display an interface 1001 and display an animation #2 in the interface 1001 in response to the operation during wake-up of the voice assistant.

It should be noted that, for the animation #1 displayed by the electronic device, the pattern #1 is used as an element in the animation #1. In this way, when the user wakes up the voice assistant, the pattern 1 is integrated with the animation #1, so that the punch-hole location on the screen is no longer obtrusive. Similarly, for the animation #2 displayed by the electronic device, the pattern 2 is used as an element in the animation #2.

In this embodiment of this application, the electronic device may link a front-facing camera pattern with an animation of an application. When changing the front-facing camera pattern, the electronic device may also synchronously change animation effect of the application, so that display diversity is enriched, and user experience can be improved.

In the foregoing descriptions, the front-facing camera pattern is linked with the animation of the application. When the front-facing camera pattern is changed, the animation of the application may also be changed. In some other examples, the electronic device may separately set a front-facing camera pattern of an application interface or a lock screen.

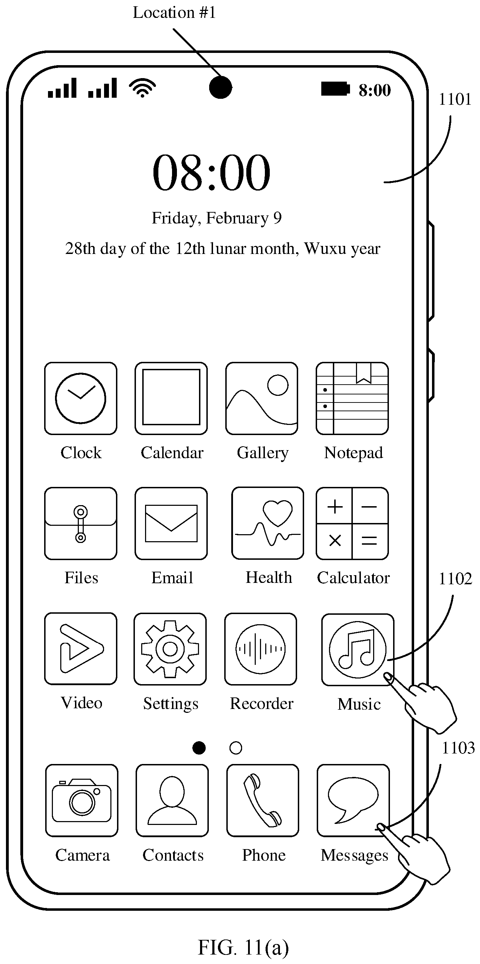

FIG. 11(a) to FIG. 11(c) show a ninth group of GUIs according to an embodiment of this application.

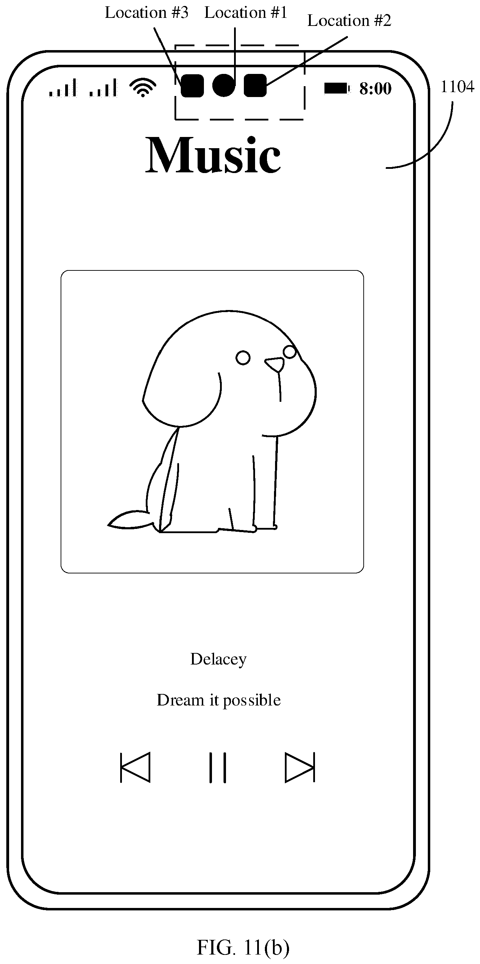

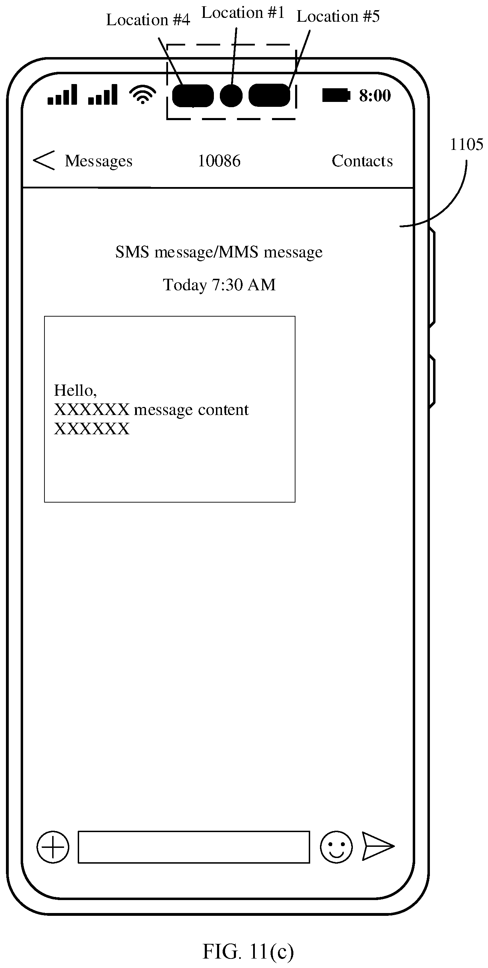

As shown in FIG. 11(a), the electronic device displays an interface 1101, the interface 1101 is a home screen, and a front-facing camera pattern used when the electronic device displays the interface 1101 is a pattern 1. When detecting an operation of tapping an icon 1102 of a music application by the user, the electronic device may display a GUI shown in FIG. 11(b) in response to the operation. When detecting an operation of tapping an icon 1103 of a messages application by the user, the electronic device may display a GUI shown in FIG. 11(c) in response to the operation.

As shown in FIG. 11(b), in response to detecting the operation of tapping the icon 1102 of the music application by the user, the electronic device may display an interface 1104. The interface 1104 is an interface of the music application. The electronic device may change the front-facing camera pattern from the pattern 1 to a pattern 2 when displaying the interface 1104.

As shown in FIG. 11(c), in response to detecting the operation of tapping the icon 1103 of the messages application by the user, the electronic device may display an interface 1105. The interface 1105 is an interface of the messages application. The electronic device may change the front-facing camera pattern from the pattern 1 to a pattern 3 when displaying the interface 1105.

In this embodiment of this application, the electronic device may use different front-facing camera patterns for different interfaces, so that display diversity is enriched, and user experience can be improved.

In the foregoing descriptions, the electronic device determines a front-facing camera pattern, to turn off pixels at one or more locations on the screen or display an animation or an image at one or more locations on the screen. When another application is displayed, the pattern may be kept. However, for some applications such as a video type application and a reading type application, the user may need a maximum screen-to-body ratio during use. In this case, when the electronic device displays an interface of the foregoing application, if the electronic device turned off pixels at one or more locations on the screen, the electronic device may turn on the pixels at the one or more locations; or if the electronic device displayed an animation or an image at pixels at one or more locations on the screen, the electronic device may stop displaying the image or the animation at the pixels at the one or more locations.

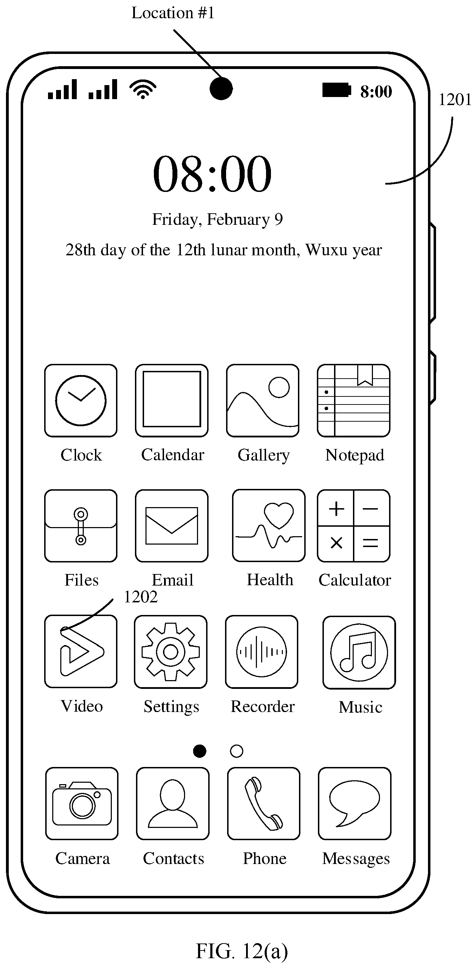

FIG. 12(a) to FIG. 12(d) show a tenth group of GUIs according to an embodiment of this application.

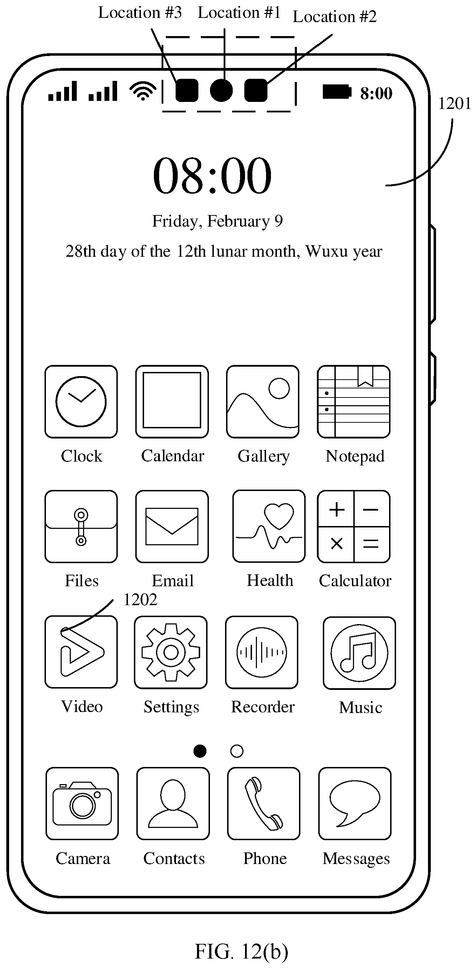

As shown in FIG. 12(a) and FIG. 12(b), a punch-hole location on the screen of the electronic device is at a location #1 on the screen, and a front-facing camera pattern is referred to as a pattern 1. The electronic device displays an interface 1201, and the interface 1201 may be a home screen. After determining a front-facing camera pattern, the electronic device may turn off pixels at a location #2 and a location #3 to form a pattern 2 with the location #1, and display the interface 1201 in the pattern 2.

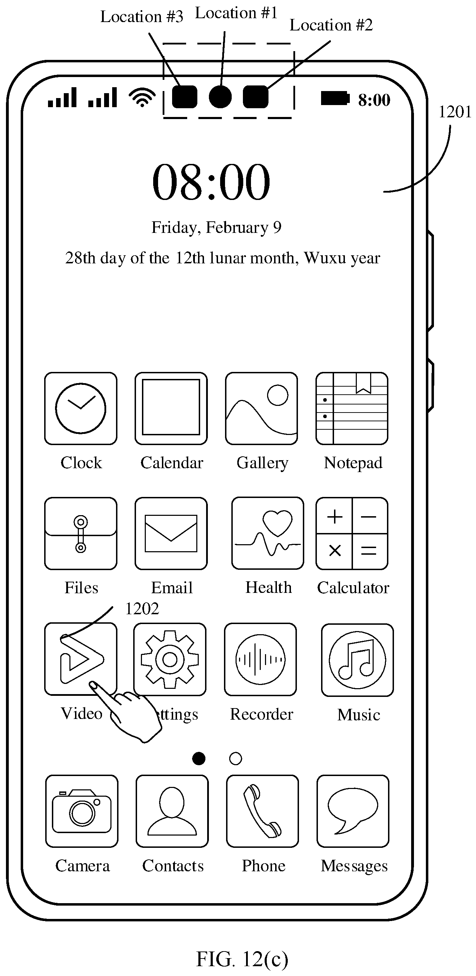

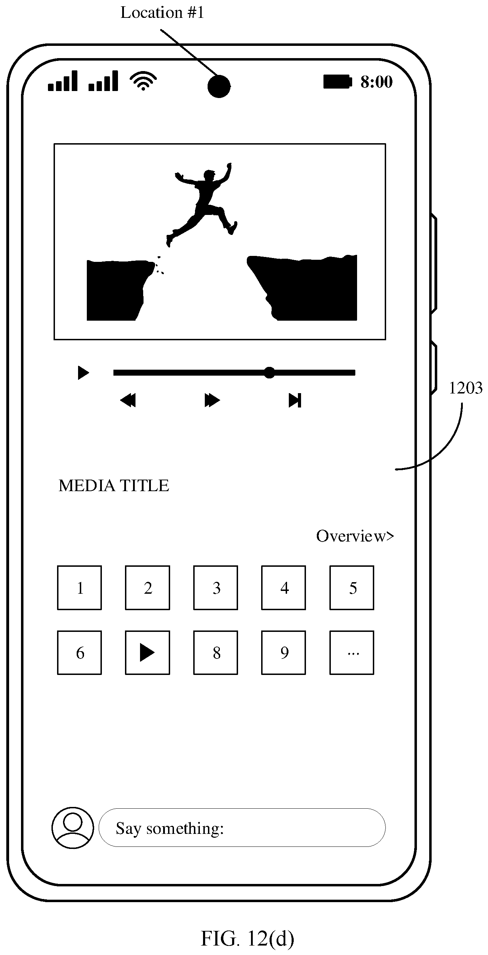

As shown in FIG. 12(c) and FIG. 12(d), in response to detecting an operation of tapping an icon 1202 of a video application by the user, the electronic device may display an interface 1203. When displaying the interface 1203, the electronic device may turn on the pixels at the location #2 and the location #3, and display, at the location #2 and the location #3, video content played by the video application.

It may be understood that when the electronic device exits the interface 1203 to display the interface 1201, the interface 1201 may still be displayed in the pattern 2.

It may be further understood that when the electronic device displays an interface of an application other than the video type application and the reading type application, the interface may still be displayed in the pattern 2. For example, the electronic device may display an interface of a social application in the pattern 2.

In this embodiment of this application, the electronic device may change a front-facing camera pattern based on a setting of the user, and a plurality of patterns are provided, so that display diversity is enriched. In this way, the user can change a front-facing camera appearance pattern to a pattern required by the user, so that use experience of the user can be improved. When displaying an interface of a video type application or a reading type application, the electronic device may temporarily remove a determined pattern and display the interface of the video type application or the reading type application in a pattern with a maximum screen-to-body ratio.

In the foregoing GUIs, there is one punch-hole on the screen of the electronic device. However, a quantity of punch-holes on the screen is not limited in embodiments of this application. In some other embodiments, there may be a plurality of punch-holes on the screen of the electronic device. In the following GUIs, an example in which there are two or three punch-holes is used, but there may be more punch-holes, for example, 4 or 5 punch-holes.

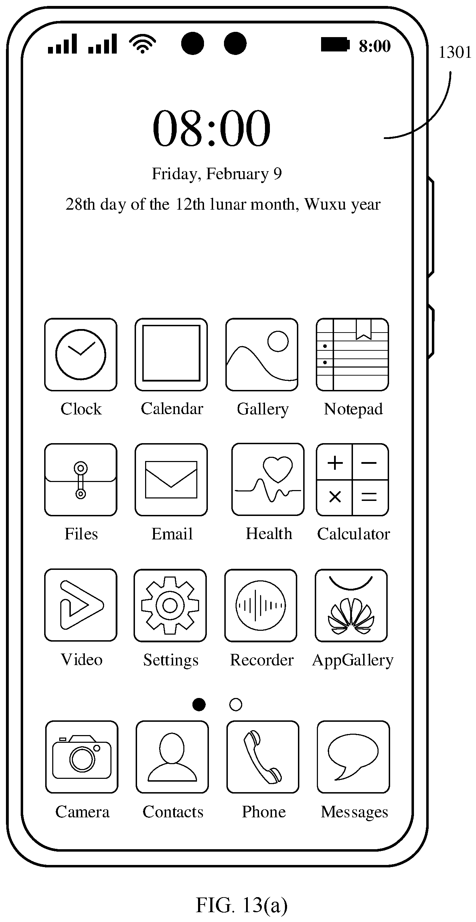

FIG. 13(a) to FIG. 13(c) show an eleventh group of GUIs according to an embodiment of this application.

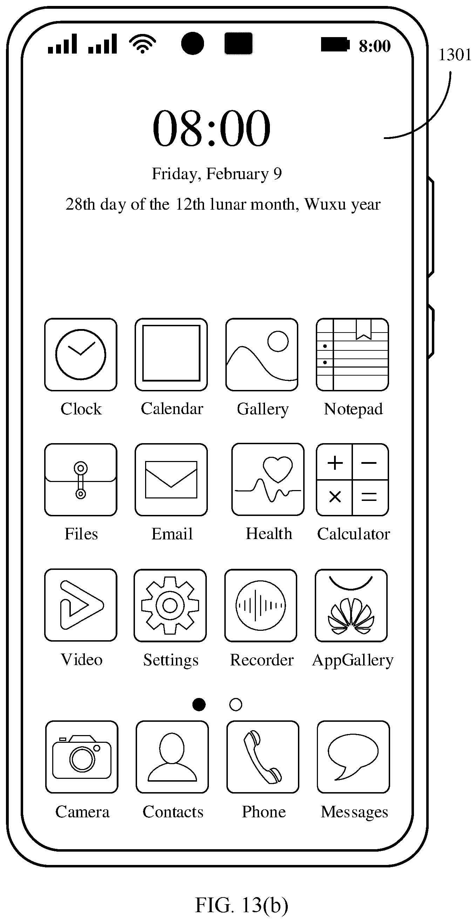

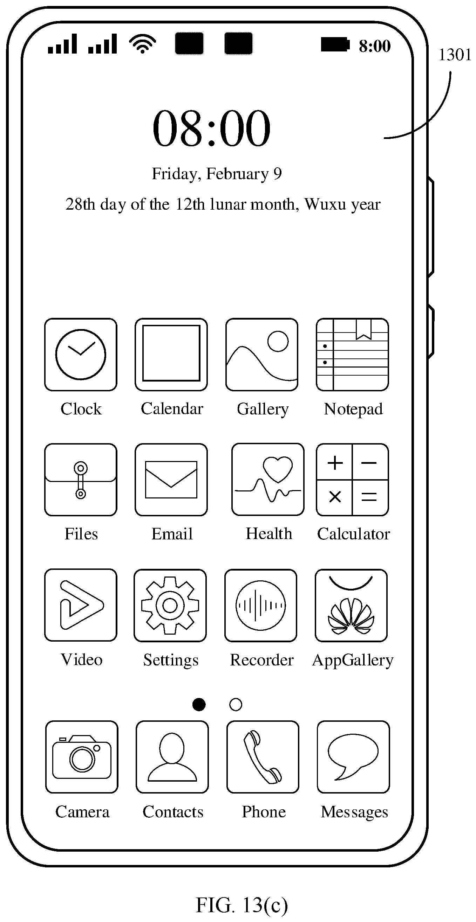

As shown in FIG. 13(a), a punch-hole location on the screen of the electronic device is a middle location at the top of the screen, and there are two punch-holes. The electronic device may display an interface 1301 in a pattern 1, and the interface 1301 is a home screen. In response to an operation of switching a pattern by the user, the electronic device may display a GUI shown in FIG. 13(b) or FIG. 13(c).

It may be understood that, for the operation of switching the pattern by the user, refer to the foregoing descriptions. For brevity, details are not described herein again.

As shown in FIG. 13(b), in response to the operation of switching the pattern by the user, the electronic device may display the interface 1301 in a pattern 2.

As shown in FIG. 13(c), in response to the operation of switching the pattern by the user, the electronic device may display the interface 1301 in a pattern 3.

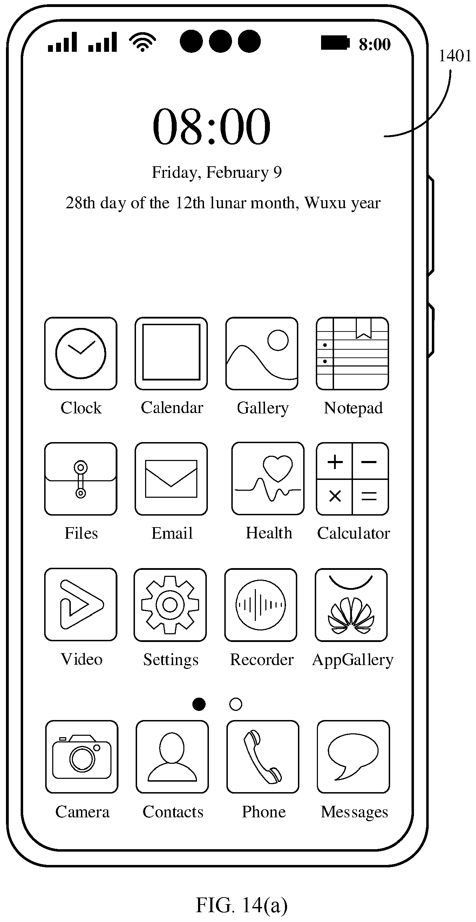

FIG. 14(a) to FIG. 14(d) show a twelfth group of GUIs according to an embodiment of this application.

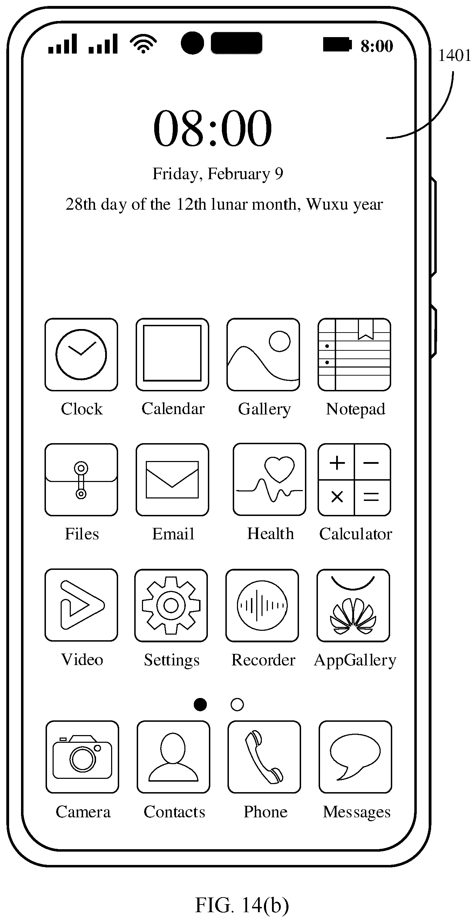

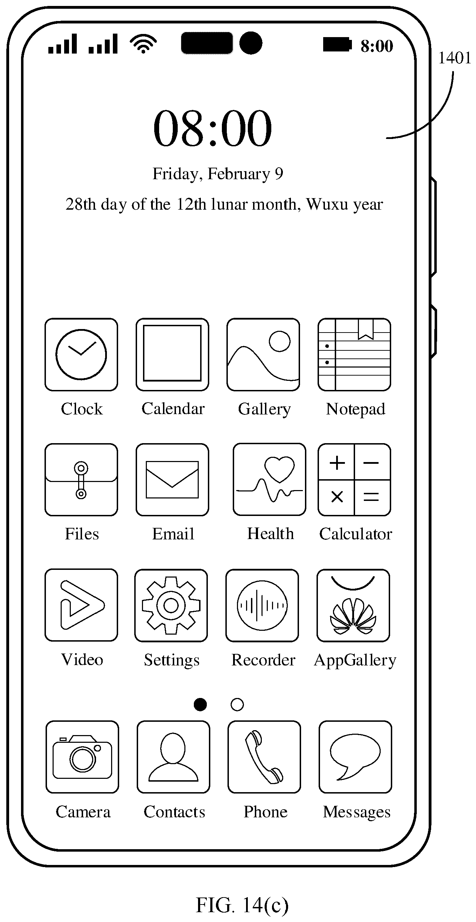

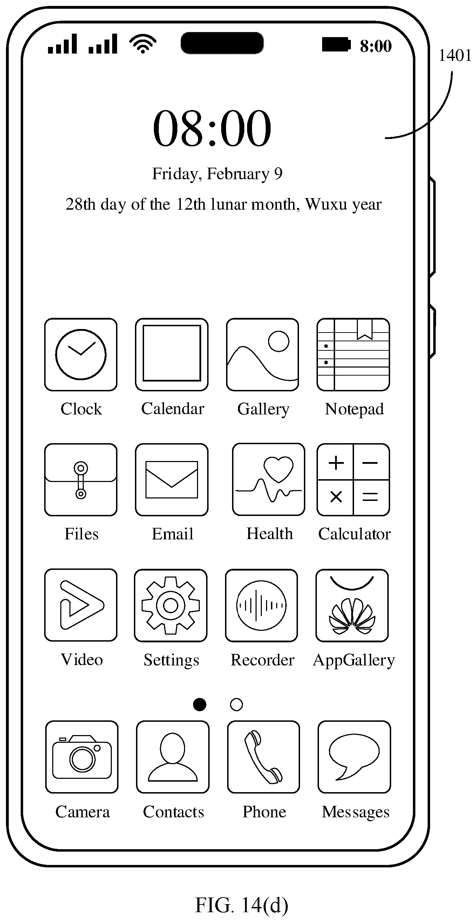

As shown in FIG. 14(a), a punch-hole location on the screen of the electronic device is a middle location at the top of the screen, and there are three punch-holes. The electronic device may display an interface 1401 in a pattern 1, and the interface 1401 is a home screen. In response to an operation of switching a pattern by the user, the electronic device may display a GUI shown in FIG. 14(b), FIG. 14(c), or FIG. 14(d).

It may be understood that, for the operation of switching the pattern by the user, refer to the foregoing descriptions. For brevity, details are not described herein again.

As shown in FIG. 14(b), in response to the operation of switching the pattern by the user, the electronic device may display the interface 1401 in a pattern 2.

As shown in FIG. 14(c), in response to the operation of switching the pattern by the user, the electronic device may display the interface 1401 in a pattern 3.

As shown in FIG. 14(d), in response to the operation of switching the pattern by the user, the electronic device may display the interface 1401 in a pattern 4.

In the foregoing GUIs, the punch-hole on the screen of the electronic device is in a circular shape. However, embodiments of this application are not limited thereto. In some other embodiments, the punch-hole on the screen of the electronic device may be in another shape.

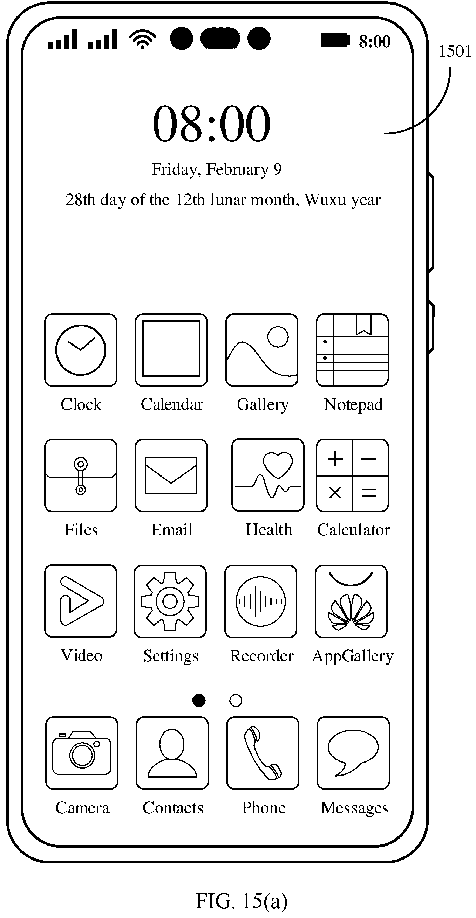

FIG. 15(a) to FIG. 15(d) show a thirteenth group of GUIs according to an embodiment of this application.

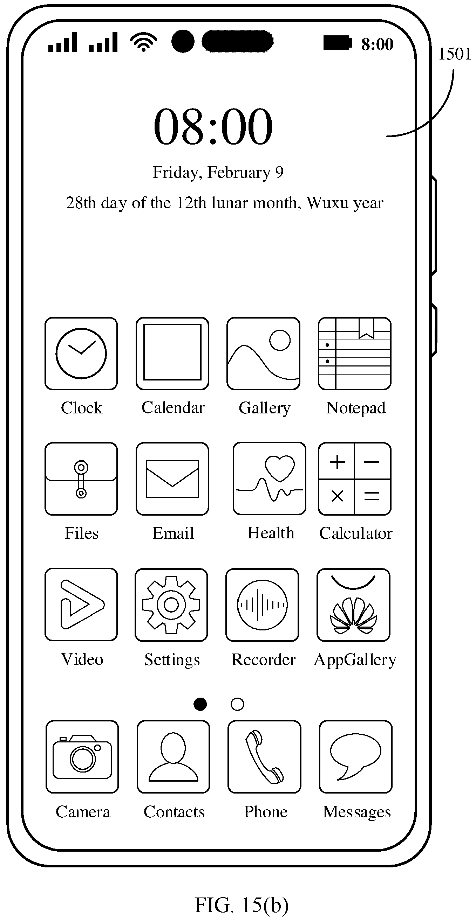

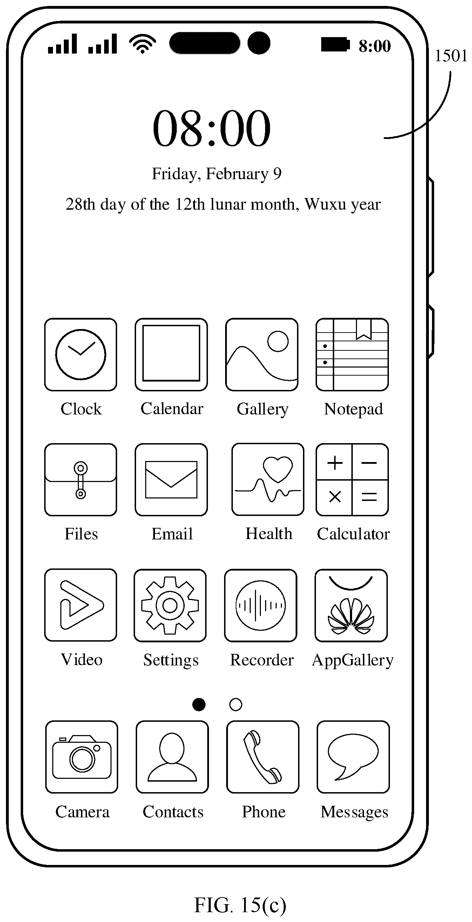

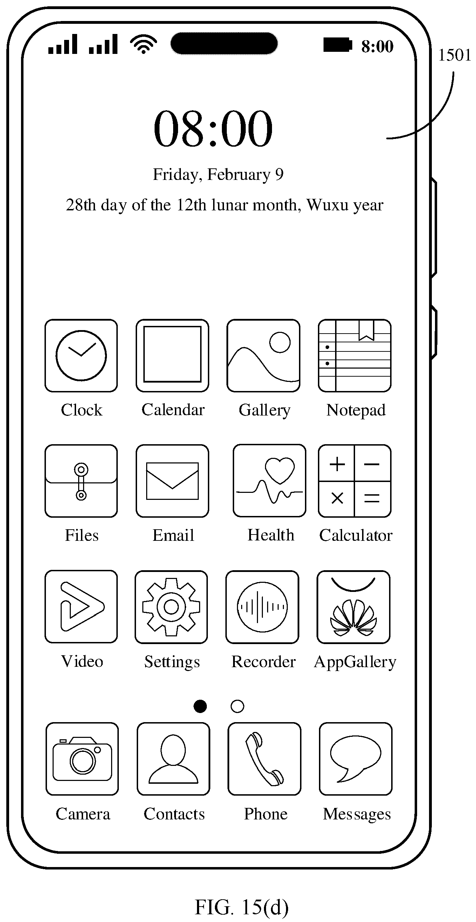

As shown in FIG. 15(a), a punch-hole location on the screen of the electronic device is a middle location at the top of the screen, and there are three punch-holes. Two punch-holes are in a circular shape, and one punch-hole is in a rounded rectangle shape. The electronic device may display an interface 1501 in a pattern 1, and the interface 1501 is a home screen. In response to an operation of switching a pattern by the user, the electronic device may display a GUI shown in FIG. 15(b), FIG. 15(c), or FIG. 15(d).

As shown in FIG. 15(b), in response to the operation of switching the pattern by the user, the electronic device may display the interface 1501 in a pattern 2.

As shown in FIG. 15(c), in response to the operation of switching the pattern by the user, the electronic device may display the interface 1501 in a pattern 3.

As shown in FIG. 15(d), in response to the operation of switching the pattern by the user, the electronic device may display the interface 1501 in a pattern 4.

It should be noted that the foregoing patterns corresponding to different quantities of punch-holes are merely examples, and shall not be understood as specific limitations on the patterns. In embodiments of this application, different quantities of punch-holes may further correspond to more patterns, or a pattern customized by the user is supported. The patterns corresponding to the different quantities of punch-holes may be partially the same. For example, there are two punch-holes, and there are three corresponding patterns: a pattern #1, a pattern #2, and a pattern #3; or there are three punch-holes, and there are four corresponding patterns: a pattern #4, a pattern #5, a pattern #6, and a pattern #7. The pattern #2 is the same as the pattern #5, the pattern #3 is the same as the pattern #6, and the pattern #1 is different from the pattern #4.

In the foregoing GUIs, the punch-hole location on the screen of the electronic device is at the middle location on the display. However, embodiments of this application are not limited thereto. In some other embodiments, the punch-hole location on the screen of the electronic device is on a left side or a right side of the screen.

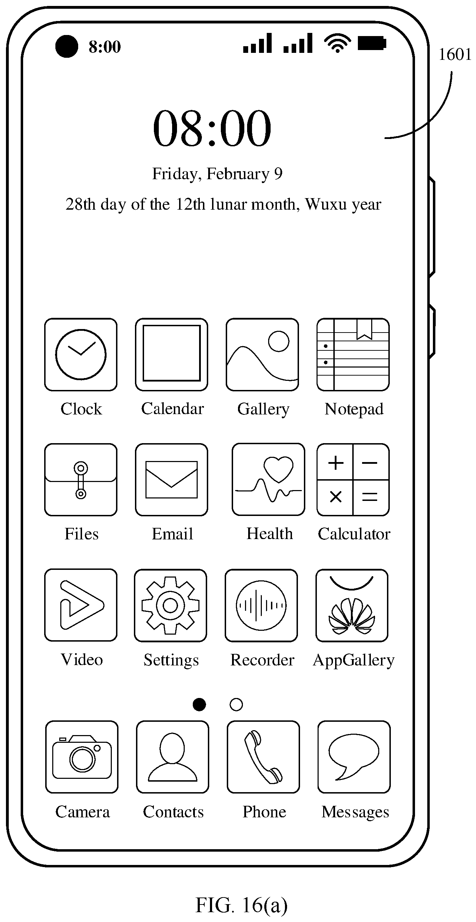

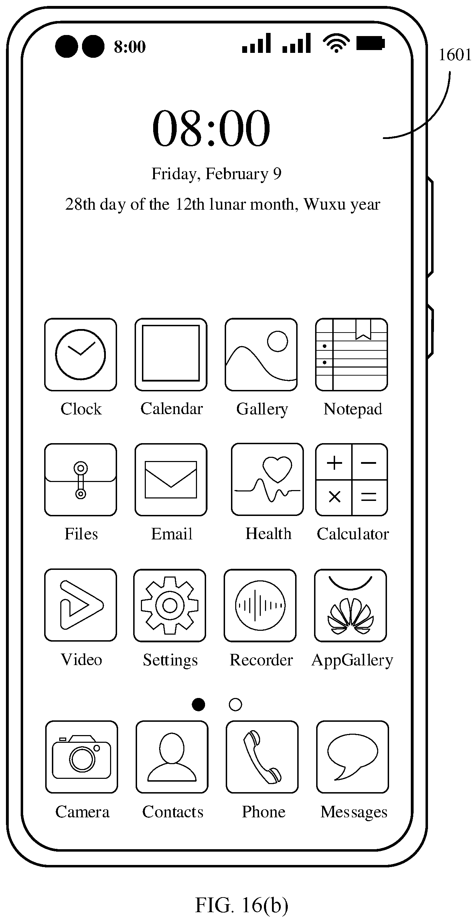

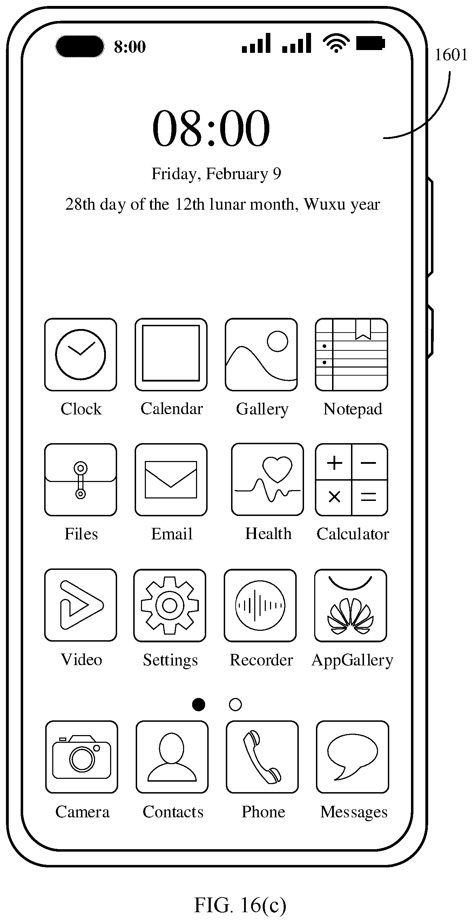

FIG. 16(a) to FIG. 16(c) show a fourteenth group of GUIs according to an embodiment of this application.

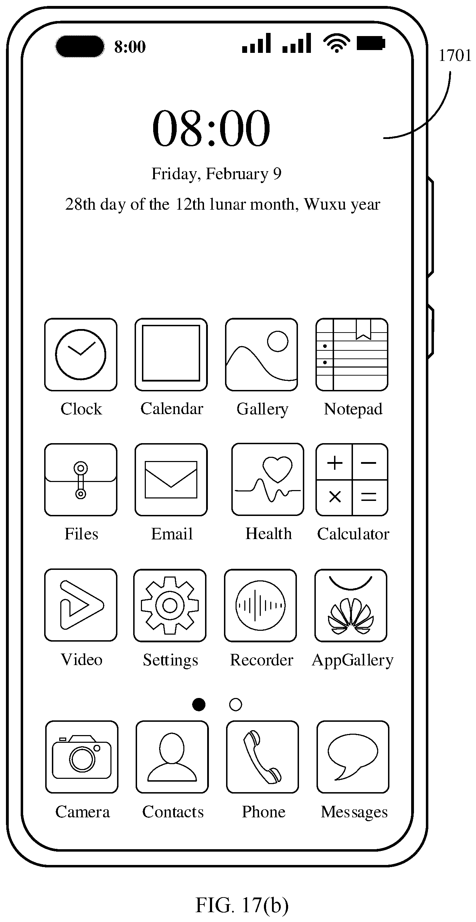

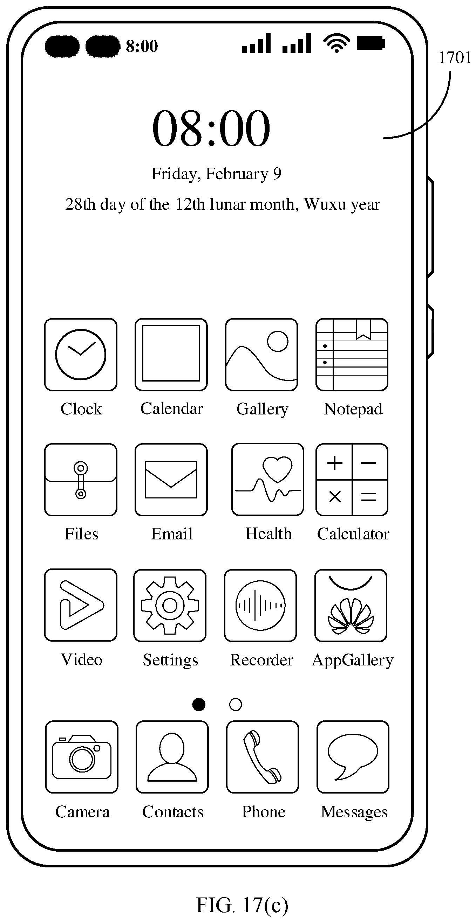

As shown in FIG. 16(a), a punch-hole location on the screen of the electronic device is on a left side at the top of the screen, and there are two punch-holes. The electronic device may display an interface 1701 in a pattern 1, and the interface 1701 is a home screen. In response to an operation of switching a pattern by the user, the electronic device may display a GUI shown in FIG. 17(b) or FIG. 17(c).

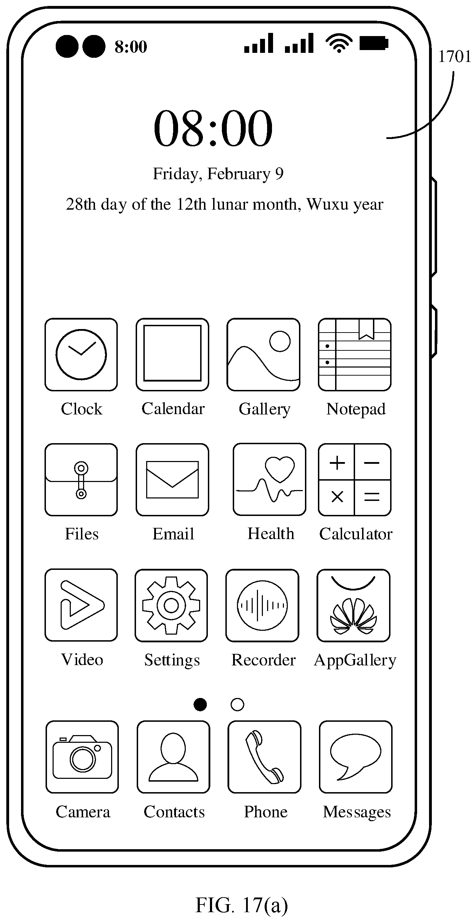

FIG. 17(a) to FIG. 17(c) show a fifteenth group of GUIs according to an embodiment of this application.

As shown in FIG. 17(b), in response to an operation of switching a pattern by the user, the electronic device may display an interface 1701 in a pattern 2.

As shown in FIG. 17(c), in response to an operation of switching a pattern by the user, the electronic device may display the interface 1701 in a pattern 3.

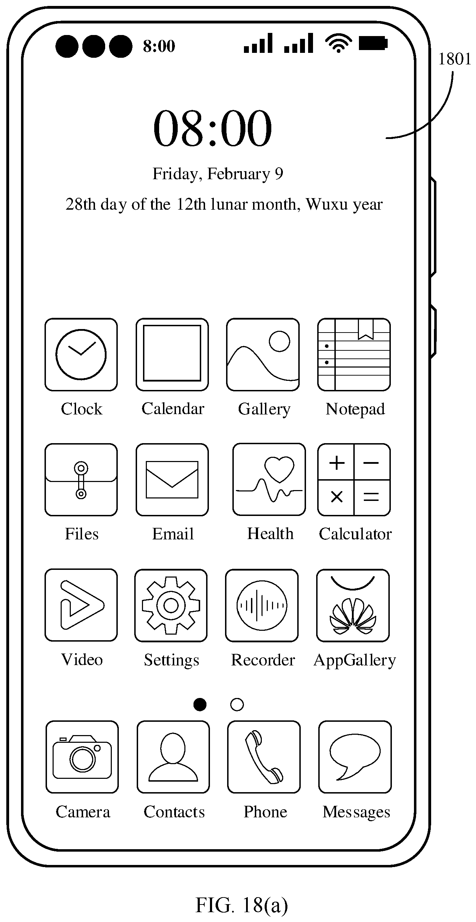

FIG. 18(a) to FIG. 18(d) show a sixteenth group of GUIs according to an embodiment of this application.

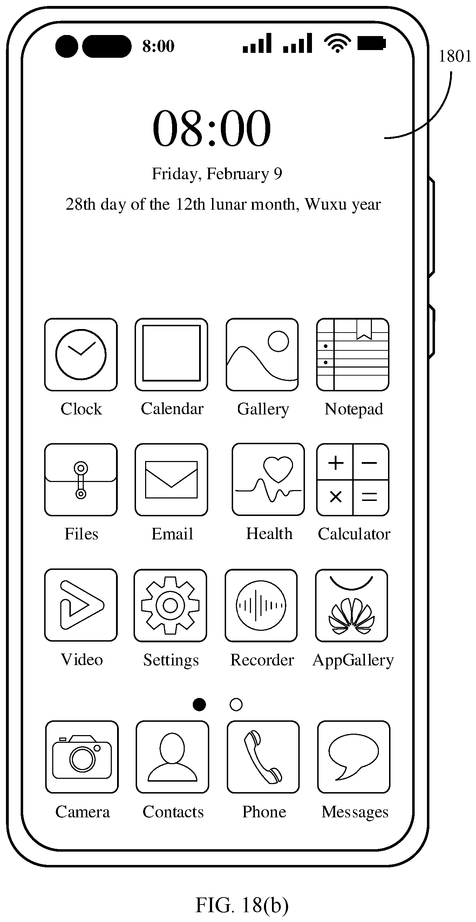

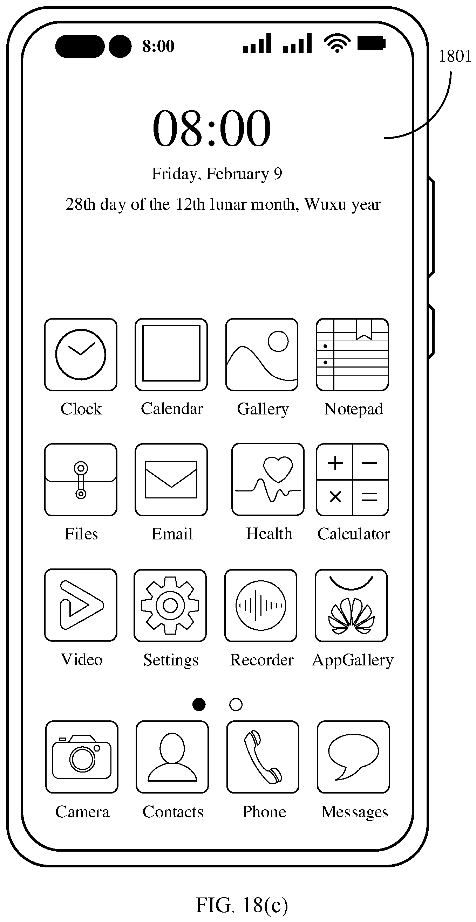

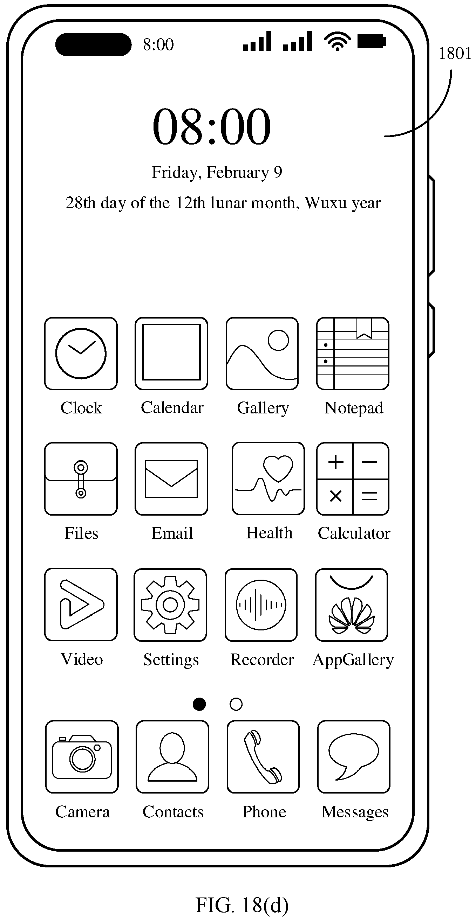

As shown in FIG. 18(a), a punch-hole location on the screen of the electronic device is on a left side at the top of the screen, and there are three punch-holes. The electronic device may display an interface 1801 in a pattern 1, and the interface 1801 is a home screen. In response to an operation of switching a pattern by the user, the electronic device may display a GUI shown in FIG. 18(b), FIG. 18(c), or FIG. 18(d).

As shown in FIG. 18(b), in response to the operation of switching the pattern by the user, the electronic device may display the interface 1801 in a pattern 2.

As shown in FIG. 18(c), in response to the operation of switching the pattern by the user, the electronic device may display the interface 1801 in a pattern 3.

As shown in FIG. 18(d), in response to the operation of switching the pattern by the user, the electronic device may display the interface 1801 in a pattern 4.

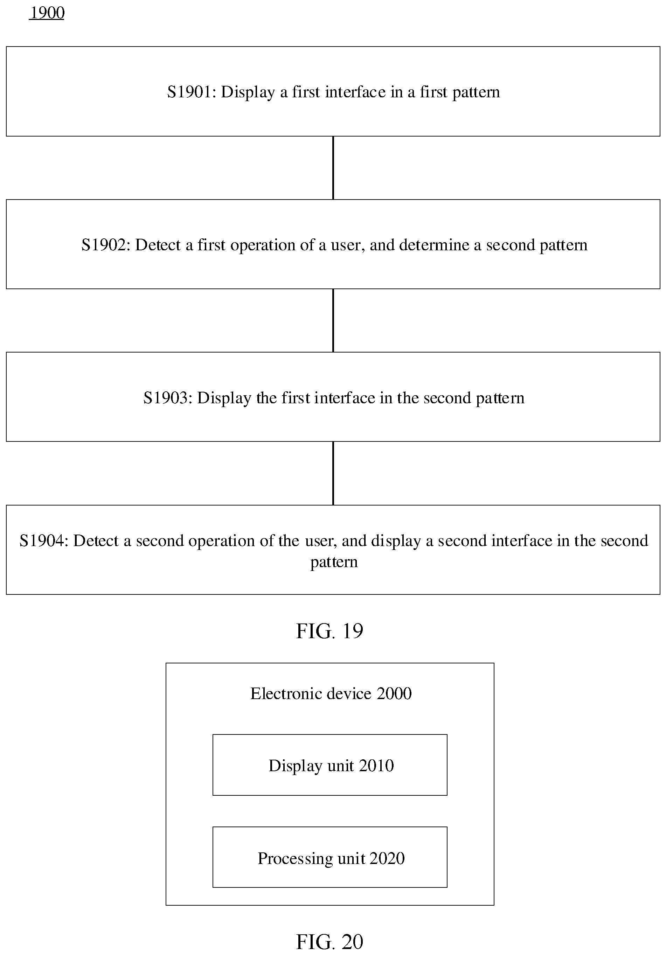

The foregoing describes, with reference to the GUIs, the display method provided in embodiments of this application. The following describes, with reference to FIG. 19, the display method provided in embodiments of this application.

FIG. 19 is a schematic flowchart of a display method 1900 according to an embodiment of this application. The method is applied to an electronic device, a screen of the electronic device is a punch-hole screen, a punch-hole location on the punch-hole screen is a first location on the screen, and a pattern corresponding to the punch-hole screen is a first pattern. The method includes the following steps.

S1901: Display a first interface in the first pattern.

For example, as shown in FIG. 3(a), the electronic device may display an interface 301 in a pattern 1. The pattern 1 is a pattern corresponding to the punch-hole screen, that is, a pattern corresponding to a display manner in which another location on the screen is unchanged.

It should be noted that there may be one or more punch-holes on the punch-hole screen, and locations corresponding to the one or more punch-holes are a first location.

S1902: Detect a first operation of a user, and determine a second pattern.

For example, the electronic device detects an operation of changing a front-facing camera pattern by the user, and may determine the second pattern.

For example, as shown in FIG. 3(a) to FIG. 3(h), the electronic device detects an operation of tapping a control 306 of a pattern 2 by the user, and determines the pattern 2 in response to the operation.

For another example, as shown in FIG. 7(a) to FIG. 7(e), the electronic device detects an operation of customizing a pattern by the user, and determines, in response to the operation, the pattern customized by the user.

For example, the electronic device detects an operation of changing a theme by the user, and may determine the second pattern.

For example, as shown in FIG. 9(a) to FIG. 9(d), the electronic device detects an operation of changing a theme by the user, and may determine a pattern 2 in response to the operation.

S1903: Display the first interface in the second pattern.

After determining the second pattern, the electronic device may display the first interface in the second pattern.

For example, as shown in FIG. 3(a) to FIG. 3(h), the electronic device may display the interface 301 in the pattern 2, that is, turn off a pixel at a location #2 when displaying the interface 301.

For another example, as shown in FIG. 4(a) to FIG. 4(c), the electronic device may display an interface 401 in a pattern 2, that is, set a color of a pixel at a location #2 to a color #1 when displaying the interface 401.

For another example, as shown in FIG. 5(a) to FIG. 5(e), the electronic device may display an interface 501 in a pattern 2, that is, display an image #1 at a location #2 when displaying the interface 501.

For another example, as shown in FIG. 6(a) to FIG. 6(d), the electronic device may display an interface 601 in a pattern 2, that is, display an animation #1 at a location #2 when displaying the interface 601.

S1904: Detect a second operation of the user, and display a second interface in the second pattern.

The electronic device detects the second operation of the user. The second operation is an operation of starting a first application. The electronic device may display the second interface in the second pattern in response to the operation. The second interface is an interface of the first application, and the first interface is not an interface of the first application. In other words, the first interface and the second interface do not belong to a same application.

For example, as shown in FIG. 3(a) to FIG. 3(h), in response to detecting an operation of tapping an icon 307 of a music application by the user, the electronic device may display an interface 308 in the pattern 2, that is, keep pixels at the location #2 and a location #3 in an off state.

In this embodiment of this application, the electronic device may change a front-facing camera pattern based on a setting of the user, and a plurality of patterns are provided, so that display diversity is enriched. In this way, the user can change the front-facing camera pattern to a pattern required by the user, so that use experience of the user can be improved.

Optionally, in some embodiments, before detecting the first operation of the user, and determining the second pattern in S1902, the method further includes:
displaying a third interface in response to an operation of waking up a voice assistant by the user; and displaying a first animation in the third interface, where the first animation is linked with the first pattern to implement first linkage effect.

Optionally, in some embodiments, after detecting the first operation of the user, and determining the second pattern in S1902, the method further includes:
displaying the third interface in response to an operation of waking up the voice assistant by the user; and displaying a second animation in the third interface, where the second animation is linked with the second pattern to implement second linkage effect.

For example, as shown in FIG. 10(a) and FIG. 10(b), when a front-facing camera pattern of the electronic device is a pattern 1 and the electronic device responds to an operation of waking up a voice assistant by the user, an animation #1 may be displayed in an interface 1001. The animation #1 may be linked with the pattern 1. To be specific, the pattern 1 is used as a part of the animation #1. When the front-facing camera pattern of the electronic device is switched to a pattern 2 and the electronic device responds to an operation of waking up the voice assistant by the user, an animation #2 may be displayed in the interface 1001. The animation #2 may be linked with the pattern 2. To be specific, the pattern 2 is used as a part of the animation #2.

In this embodiment of this application, the electronic device may link a front-facing camera pattern with an animation of an application. When changing the front-facing camera pattern, the electronic device may also synchronously change animation effect of the application. The front-facing camera pattern is integrated with the animation effect, so that display diversity is enriched, and user experience can be improved.

Optionally, in some embodiments, the method further includes:
detecting a third operation of the user, and displaying a fourth interface in a third pattern.

The electronic device detects the third operation of the user. The third operation is an operation of starting a second application. The electronic device may display the third interface in the third pattern in response to the operation. The third interface is an interface of the second application.

For example, as shown in FIG. 11(a) to FIG. 11(c), in response to detecting an operation of tapping an icon 1102 of a music application by the user, the electronic device displays an interface 1104 in a pattern 2. In response to detecting an operation of tapping an icon 1103 of a messages application by the user, the electronic device displays an interface 1105 in a pattern 3.

In this embodiment of this application, the electronic device may use different front-facing camera patterns for different interfaces, so that display diversity is enriched, and user experience can be improved.

Optionally, in some embodiments, the method further includes:
detecting an operation of starting a video type application or a reading type application by the user, and displaying a fifth interface in the first pattern, where the fifth interface is an interface of the video type application or the reading type application.

For example, as shown in FIG. 12(a) to FIG. 12(d), the electronic device already set a front-facing camera pattern to a pattern 2. In response to detecting an operation of tapping a video application 1202 by the user, the electronic device may display an interface 1203 in a pattern 1. The interface 1203 is an interface of the video application.

In this embodiment of this application, the electronic device may change a front-facing camera pattern based on a setting of the user, and a plurality of patterns are provided, so that display diversity is enriched. In this way, the user can change a front-facing camera appearance pattern to a pattern required by the user, so that use experience of the user can be improved. When displaying an interface of a video type application or a reading type application, the electronic device may temporarily remove a determined pattern and display the interface of the video type application or the reading type application in a pattern with a maximum screen-to-body ratio.

In this embodiment of this application, the electronic device may determine the second pattern in the following several possible manners.

In a possible implementation, the electronic device turns off a pixel at a second location to form the second pattern with the first location.

For example, as shown in FIG. 3(a) to FIG. 3(h), the electronic device turns off the pixel at the location #2 to form the pattern 2 with a location #1.

In a possible implementation, the electronic device sets a color of the pixel at the second location to a first color to form the second pattern with the first location.

For example, as shown in FIG. 4(a) to FIG. 4(c), the electronic device sets the color of the pixel at the location #2 to the color #1.

In a possible implementation, the electronic device displays a first image or a third animation at the second location to form the second pattern with the first location.

For example, as shown in FIG. 5(a) to FIG. 5(e), the electronic device displays the image #1 at the location #2.

For another example, as shown in FIG. 6(a) to FIG. 6(d), the electronic device displays the animation #1 at the location #2.

The foregoing mainly describes, from a perspective of the electronic device, the display method provided in embodiments of this application. It may be understood that, to implement the foregoing functions, the electronic device and a server include corresponding hardware structures and/or software modules for performing the functions. A person skilled in the art should easily be aware that, algorithm steps in the examples described with reference to embodiments disclosed in this specification can be implemented by hardware or a combination of hardware and computer software in this application. Whether a function is performed by hardware or hardware driven by computer software depends on particular applications and design constraints of the technical solutions. A person skilled in the art may use different methods to implement the described functions for each particular application, but it shall not be considered that the implementation goes beyond the scope of this application.

In embodiments of this application, the processor of the electronic device may be divided into functional modules based on the foregoing method examples. For example, each functional module may be obtained through division corresponding to each function, or two or more functions may be integrated into one processing module. The integrated module may be implemented in a form of hardware, or may be implemented in a form of software functional module.

When each functional module is obtained through division corresponding to each function, FIG. 20 is a diagram of composition of an electronic device according to an embodiment of this application. As shown in FIG. 20, the electronic device 2000 includes a display module 2010 and a processing module 2020.

The display module 2010 is configured to display a first interface in a first pattern.

The processing module 2020 is configured to detect a first operation of a user, and determine a second pattern, where the first operation includes an operation of changing a front-facing camera pattern or changing a theme by the user.

The display module 2010 is further configured to display the first interface in the second pattern.

The display module 2010 is further configured to detect a second operation of the user, and display a second interface in the second pattern, where the second operation is an operation of starting a first application, the second interface is an interface of the first application, and the second interface and the first interface do not belong to a same application.

The display module 2010 is further configured to display a third interface in response to an operation of waking up a voice assistant by the user; and
display a first animation in the third interface, where the first animation is linked with the first pattern to implement first linkage effect.

The display module 2010 is further configured to display the third interface in response to an operation of waking up the voice assistant by the user; and
display a second animation in the third interface, where the second animation is linked with the second pattern to implement second linkage effect.

The display module 2010 is further configured to display a fourth interface in a third pattern in response to a third operation of the user, where the third operation is an operation of starting a second application, and the fourth interface is an interface of the second application.

The display module 2010 is further configured to detect an operation of starting a video type application or a reading type application by the user, and display a fifth interface in the first pattern, where the fifth interface is an interface of the video type application or the reading type application.

The processing unit 2020 is specifically configured to: turn off a pixel at a second location on a screen to form the second pattern with a first location;
set a color of the pixel at the second location on the screen to a first color to form the second pattern with the first location;
display a first image at the second location on the screen to form the second pattern with the first location; or
display a third animation at the second location on the screen to form the second pattern with the first location.

It should be noted that all related content of steps in the foregoing method embodiments may be cited in function descriptions of corresponding functional modules. Details are not described herein again. The electronic device provided in embodiments of this application is configured to perform the foregoing display method, and therefore can achieve same effects as the foregoing.

An embodiment of this application further provides an electronic device, including a processor, a memory, an application, and a computer program. The foregoing components may be connected through one or more communication buses. One or more computer programs are stored in the memory and are configured to be executed by one or more processors. The one or more computer programs include instructions, and the instructions may be used to enable the electronic device to perform the steps performed by the electronic device in the foregoing embodiments.

For example, the processor may be specifically the processor 110 shown in FIG. 1, and the memory may be specifically the internal memory 120 shown in FIG. 1 and/or an external memory connected to the electronic device.

An embodiment of this application further provides a chip. The chip includes a processor and a communication interface. The communication interface is configured to receive a signal and transmit the signal to the processor, and the processor processes the signal, so that the display method according to any one of the foregoing possible implementations is performed.

An embodiment further provides a computer-readable storage medium. The computer-readable storage medium stores computer instructions. When the computer instructions are run on an electronic device, the electronic device is enabled to perform the foregoing related method steps to implement the display method in the foregoing embodiments.

An embodiment further provides a computer program product. When the computer program product runs on a computer, the computer is enabled to perform the foregoing related steps to implement the display method in the foregoing embodiments.

According to the context, the term "when" or "after" used in the foregoing embodiments may be interpreted as a meaning of "if" or "after" or "in response to determining" or "in response to detecting". Similarly, according to the context, the phrase "when it is determined that" or "if (a stated condition or event) is detected" may be interpreted as a meaning of "if it is determined that", "in response to determining", "when (a stated condition or event) is detected", or "in response to detecting (a stated condition or event)".

A person of ordinary skill in the art may be aware that, units and algorithm steps in the examples described with reference to embodiments disclosed in this specification can be implemented by electronic hardware or a combination of computer software and electronic hardware. Whether these functions are performed by hardware or software depends on particular applications and design constraints of the technical solutions. A person skilled in the art may use different methods to implement the described functions for each particular application, but it shall not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, the division into units is merely logical function division and may be other division during actual implementation. For example, a plurality of units or components may be combined or integrated into another system, or some features may be ignored or may not be performed. In addition, the displayed or discussed mutual couplings or direct couplings or communication connection may be implemented through some interfaces. The indirect couplings or communication connection between apparatuses or units may be implemented in electronic, mechanical, or other forms.

The units described as separate components may or may not be physically separate, and components displayed as units may or may not be physical units, may be located in one place, or may be distributed on a plurality of network units. Some or all of the units may be selected according to an actual requirement to achieve the objectives of the solutions of embodiments.

In addition, functional units in embodiments of this application may be integrated into one processing unit, each of the units may exist alone physically, or two or more units may be integrated into one unit.

When the functions are implemented in a form of software functional unit and sold or used as an independent product, the functions may be stored in a computer-readable storage medium. Based on such an understanding, the technical solutions of this application essentially or parts contributing to the prior art or some of the technical solutions may be embodied in a form of software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A display method, wherein the method is applied to an electronic device, a screen of the electronic device is a punch-hole screen, a punch-hole location on the punch-hole screen is a first location on the screen, a pattern corresponding to the punch-hole screen is a first pattern, and the method comprises:
displaying a first interface in the first pattern;
detecting a first operation of a user, and determining a second pattern, wherein the first operation comprises an operation of changing a front-facing camera pattern or changing a theme by the user;
displaying the first interface in the second pattern; and
detecting a second operation of the user, and displaying a second interface in the second pattern, wherein the second operation is an operation of starting a first application, the second interface is an interface of the first application, and the second interface and the first interface do not belong to a same application.

2. The method according to claim 1, wherein before detecting the first operation of the user, and determining the second pattern, the method further comprises:
displaying a third interface in response to an operation of waking up a voice assistant by the user; and
displaying a first animation in the third interface, wherein the first animation is linked with the first pattern to implement first linkage effect.

3. The method according to claim 2, wherein after detecting the first operation of the user, and determining the second pattern, the method further comprises:
displaying the third interface in response to an operation of waking up the voice assistant by the user; and
displaying a second animation in the third interface, wherein the second animation is linked with the second pattern to implement second linkage effect.

4. The method according to any one of claims 1 to 3, wherein the method further comprises:
displaying a fourth interface in a third pattern in response to a third operation of the user, wherein the third operation is an operation of starting a second application, and the fourth interface is an interface of the second application.

5. The method according to any one of claims 1 to 4, wherein the method further comprises:
detecting an operation of starting a video type application or a reading type application by the user, and displaying the fifth interface in the first pattern, wherein the fifth interface is an interface of the video type application or the reading type application.

6. The method according to any one of claims 1 to 5, wherein determining the second pattern comprises:
turning off a pixel at a second location on the screen to form the second pattern with the first location.

7. The method according to any one of claims 1 to 5, wherein determining the second pattern comprises:
setting a color of a pixel at a second location on the screen to a first color to form the second pattern with the first location.

8. The method according to any one of claims 1 to 5, wherein determining the second pattern comprises:
displaying a first image at a second location on the screen to form the second pattern with the first location.

9. The method according to any one of claims 1 to 5, wherein determining the second pattern comprises:
displaying a third animation at a second location on the screen to form the second pattern with the first location.

10. An electronic device, comprising one or more processors and one or more memories, wherein the one or more memories store one or more computer programs, the one or more computer programs comprise instructions, and when the instructions are executed by the one or more processors, the method according to any one of claims 1 to 9 is performed.

11. A chip, wherein the chip comprises a processor and a communication interface, the communication interface is configured to receive a signal and transmit the signal to the processor, and the processor processes the signal, so that the method according to any one of claims 1 to 9 is performed.

12. A computer-readable storage medium, wherein the computer-readable storage medium stores computer instructions, and when the computer instructions are run on a computer, the method according to any one of claims 1 to 9 is performed.

13. A computer program product comprising instructions, wherein when the computer program product runs on a computer, the computer is enabled to perform the method according to any one of claims 1 to 9.
